**Europäisches Patentamt**

**European Patent Office**

**Office européen des brevets**

(19)

(11) **EP 1 551 007 A1**

(12) **EUROPEAN PATENT APPLICATION**
published in accordance with Art. 158(3) EPC

(43) Date of publication:
06.07.2005 Bulletin 2005/27

(51) Int Cl.⁷: **G10L 15/18**

(21) Application number: **03751317.3**

(22) Date of filing: **03.10.2003**

(86) International application number:
**PCT/JP2003/012701**

(87) International publication number:
**WO 2004/034378 (22.04.2004 Gazette 2004/17)**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: 08.10.2002 JP 2002294500
18.07.2003 JP 2003276844

(71) Applicant: **MATSUSHITA ELECTRIC INDUSTRIAL CO., LTD.**
**Kadoma-shi, Osaka 571-8501 (JP)**

(72) Inventors:
• **OKIMOTO, Yoshiyuki**
  **Souraku-gun, Kyoto 619-0224 (JP)**
• **ENDO, Mitsuru**
  **Kawasaki-shi, Kanagawa 216-0015 (JP)**
• **NISHIZAKI, Makoto**
  **Nerima-ku, Tokyo 177-0034 (JP)**

(74) Representative: **Pautex Schneider, Nicole et al**
**Novagraaf International SA**
**25, avenue du Pailly**
**1220 Les Avanchets - Geneva (CH)**

(54) **LANGUAGE MODEL CREATION/ACCUMULATION DEVICE, SPEECH RECOGNITION DEVICE, LANGUAGE MODEL CREATION METHOD, AND SPEECH RECOGNITION METHOD**

(57)     A language model generation and accumulation apparatus (10) that generates and accumulates language models for speech recognition is comprised of: a higher-level N-gram generation and accumulation unit (11) that generates and accumulates a higher-level N-gram language model obtained by modeling each of a plurality of texts as a string of words including a word string class having a specific linguistic property; and a lower class dependent word N-gram generation and accumulation unit (12) that generates and accumulates a lower-level N-gram language model obtained by modeling a sequence of words included in each word string class.

FIG. 2

EP 1 551 007 A1

## Description

### Technical Field

The present invention relates to a language model generation and accumulation apparatus and a speech recognition apparatus, and the like, and more particularly to a speech recognition apparatus and a speech recognition method, and the like that utilize statistical language models.

### Background Art

In recent years, research has been conducted on methods of using language models in a speech recognition apparatus in order to enhance its performance.

A widely used language model is word N gram models such as a standard word bigram model or word trigram model (See Non-Patent Document 1, for example).

Here, a description is given of how language likelihood is calculated by use of word N-gram.

First, the language likelihood $\log P$ (W1, W2,..., WL) of a string of words W1, W2,..., WL is represented by the following equation (1), using conditional probability:

$$\log P(W1, W2, \cdots, WL) = \sum_{i=1}^{L} \log P(Wi \mid W1, W2, \cdots W(i\text{-}1)) \cdots (1)$$

The conditional probability $P\{Wi \mid W1, W2,..., W(i\text{-}1)\}$ in the right side of equation (1) indicates the probability that the word Wi appears following the preceding string of words W1, W2,..., W(i-1). Word N-gram model is a model in which an approximation is made based on N-1 preceding word(s) in the string. In word bigram in which an approximation is made based on one preceding word in the string, probability is represented by the following equation (2) that is an approximate expression:

$$P(Wi \mid W1, W2, \cdots, W(i\text{-}1)) \fallingdotseq P(Wi \mid W(i\text{-}1)) \tag{2}$$

Similarly, in word trigram in which an approximation is made based on two preceding words in the string, probability is represented by the following equation (3) that is an approximate expression:

$$P(Wi \mid W1, W2, \cdots, W(i\text{-}1)) \fallingdotseq P(Wi \mid W(i\text{-}2), W(i\text{-}1)) \tag{3}$$

The following is performed in speech recognition: the acoustic likelihood of each of word string candidates is derived by use of an acoustic model such as HMM (Hidden Markov Model) that is an isolated word speech probability model; language likelihood is computed in the above-described manner; and the word string candidates are ranked based on the total likelihood that is obtained as the weighted sum of the likelihoods.

There are various variations of the N-gram model, but here, three conventional arts related to the present invention are explained below.

A first variation of the N-gram model is a technology in which a probability is computed by categorizing, into a class, words having common property out of a group of words (See Patent Document 1, for example). Note that this technology is hereinafter referred to also as the "first conventional art". In the class N-gram model of the first conventional art, a word N-gram is approximated as shown in the following equation (4) by use of a class (in the case where N=2):

$$P(Wi \mid W(i\text{-}1)) \fallingdotseq P(Ci \mid C(i\text{-}1)) \times P(Wi \mid Ci) \tag{4}$$

where, Ci denotes a classified word.

The calculation of language likelihood via a class is useful for the problem that the accuracy of language likelihood of a word string with little training data is low, the problem being caused due to an inefficient amount of data.

A second variation of the N-gram model is a technology in which a new variable length unit is created by concatenating frequently-appearing word strings, and N-grams within the variable length unit are used (See Patent Document 2, for example). Note that this technology is hereinafter also referred to as the "second conventional art". This class N-gram model of the second conventional art, which is a scheme related to a unit, is based on equation (2) and equation (4). According to this second conventional art, it is possible to compute language likelihood that takes into account a longer context, by using a longer length of unit than one word.

Furthermore, a third variation of the N-gram model is a technology in which some of the classes in the class N-gram, such as name, are represented not by words but by another N-gram as a more segmented string of units such as syllables (See Patent Document 3, for example). Note that this technology is hereinafter also referred to as the "third conventional art". In other words, in the third conventional art, the second term of the right side of equation (4) is approximated as the following equation (5):

$$P(Wi \mid Ci) \fallingdotseq P(P1, P2, \cdots, Pj \mid Ci) \tag{5}$$

Here, P1, P2,..., Pj denotes a string of units indicating the pronunciations of the words.

The accuracy of the right side of equation (5) is further improved by being represented by the product of a probability related to the alignment of syllables and a probability related to the number of syllables within a word, making it possible to represent a class including many items such as names in an efficient manner.

In all of the above cases, it is possible to compute probability values mechanically by processing a training text corpus.

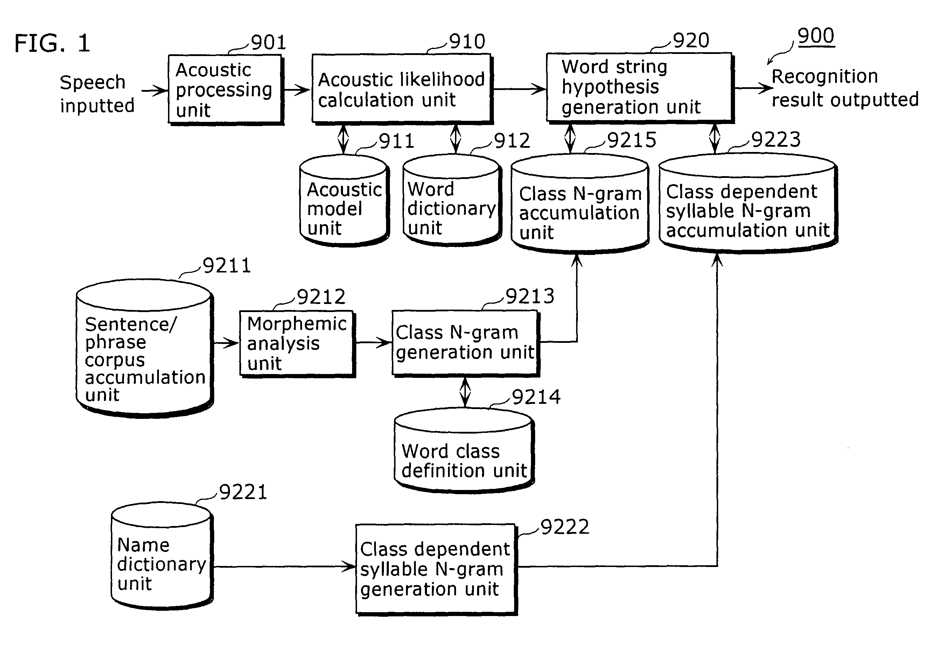

FIG. 1 is a block diagram showing a functional configuration of a speech recognition apparatus according to the third conventional art.

As FIG. 1 shows, a speech recognition appatatus 900 is comprised of: an acoustic processing unit 901 that captures an input utterance and extracts feature parameters; an acoustic likelihood calculation unit 910 that compares the feature parameters against words; an acoustic model unit 911 that is modeled acoustic features of a speaker; a word dictionary unit 912 that describes the pronunciations of words to be recognized; a word string hypothesis generation unit 920 that generates word string hypotheses by reference to class N-grams and class dependent syllable N-grams; a class N-gram accumulation unit 9215 that evaluates the context of a word; a class dependent syllable N-gram accumulation unit 9223 that evaluates the context of syllables; a sentence/phrase corpus accumulation unit 9211 in which a large number of sentences and phrases to be recognized are accumulated; a morphemic analysis unit 9212 that performs morphemic analysis of sentences/phrases; a class N-gram generation unit 9213 that generates class N-grams from the statistics of chains of words or word classes; a word class definition unit 9214 that defines words with a common property as a class; a name dictionary unit 9221 that accumulates names; and a class dependent syllable N-gram generation unit 9222 that determines the statistics of chains of syllables so as to generate class dependent syllable N-grams.

Next, the above operation is explained. This operation is divided roughly into pre-processing for generating language models and recognition processing for sequentially recognizing an input utterance.

First, a description is given of the pre-processing for generating language models.

Sentences/phrases are accumulated in advance in the sentences/phrases corpus accumulation unit 9211. The morphemic analysis unit 9212 performs morphemic analysis of a sentence/phrase accumulated in the sentence/phrase corpus accumulation unit 9211, and divides it into word units, i.e. morphemes. The class N-gram generation unit 9213 substitutes, with a word class, morphemic-analyzed words in the corpus with reference to the word class definition unit 9214, and determines the statistics of chains of words or chains of a word and the word class to generate class N-grams. The class N-gram accumulation unit 9215 accumulates the statistics of the chains of words or chains of a word and the word class.

Meanwhile, in the name dictionary unit 9221, strings of syllables that are the phonetic readings of names, are stored in advance. The class dependent syllable N-gram generation unit 9222 determines the statistics of chains of syllables in the syllable strings, which are the phonetic readings of the names accumulated in the name dictionary unit 9221, so as to generate class dependent syllable N-grams. The class dependent syllable N-gram accumulation unit 9223 accumulates the statistics of the chains of the syllables.

Next, a description is given of the recognition processing for sequentially recognizing an input utterance.

An input utterance is processed by the acoustic processing unit 901 to be converted into feature parameters. The acoustic likelihood calculation unit 910 performs matching between the feature parameters and each of the words in the word dictionary with reference to the acoustic model unit 911 and the word dictionary unit 912, and a set of word hypotheses is outputted that is made up of the utterance segment of each word and the acoustic likelihood of each word. The word string hypothesis generation unit 920 formulates the set of word hypotheses into a word string hypothesis, which is then added with language likelihood that is computed using equation (1) to equation (5).

As described above, the ranking is determined based on the criteria that are evaluated by a primary expression of acoustic likelihood and language likelihood, and a word string candidate is outputted as a recognition result.

[Non-Patent Document 1]

Ohtsuki, Mori, Matsuoka, Furui, and Shirai: "*Study of large vocabulary speech recognition using newspaper articles*", Shingaku Giho, SP95-90 (1995-12)

[Patent Document 1]

Japanese Laid-Open Patent application No. 2000-259175 (pp. 5-9, FIG. 1)

[Patent Document 2]

Japanese Patent No. 3004254 (pp. 4-19, FIG. 1)

[Patent Document 3]

Japanese Laid-Open Patent application No. 2001-236089 (pp. 4-11, FIG. 1)

The accuracy of linguistic prediction performed by speech recognition apparatuses are required to be improved for increasing recognition accuracy.

However, the conventional methods have the problem that it is difficult to improve the accuracy of linguistic prediction in the case of processing television program and cinema title, e.g. *"Tsuki ni Mukatte Tobe"* and *"Taiyo wo Ute",* which include a first property that they serve as a single word with respect to their preceding and following words as well as a second property that they are plural words from the standpoint of the internal structure of the phrase.

Stated another way, if a title is defined as one word, the size of the recognition dictionary becomes increased because there are a large number of word types. If a title is defined as a string of words, on the other hand, restrictions become loose since the context that includes the preceding and following words of the title is out of the scope of bigram and trigram. More specifically, the first conventional art and second conventional art encounter either of the problems that restrictions become loose or the size of the dictionary becomes increased depending on unit length, since these conventional arts determine a unit length first, and then take into account the context equivalent to two or three of such units. Moreover, the third conventional art employs a double structure in which a title is treated as a single word with respect to its preceding and following words, whereas as processing for inside the title, it is modeled as a phonetic string, and so this technology has a restriction on the prediction accuracy of the pronunciations of a long title.

In view of the above, the present invention aims at providing a language model generation and accumulation apparatus and a speech recognition apparatus, and the like that are capable of handling television program titles and the like having double properties, i.e. a property as a single word and a property as plural words, capable of providing compatibility between a prediction accuracy of language likelihood and a compact recognition dictionary, and capable of improving recognition accuracy.

**Disclosure of Invention**

In order to achieve the above object, in the language model generation and accumulation apparatus according to the present invention is a language model generation and accumulation apparatus that generates and accumulates language models for speech recognition, the apparatus comprising: a higher-level N-gram language model generation and accumulation unit operable to generate and accumulate a higher-level N-gram language model that is obtained by modeling each of a plurality of texts as a sequence of words that includes a word string class having a specific linguistic property; and a lower-level N-gram language model generation and accumulation unit operable to generate and accumulate a lower-level N-gram language model that is obtained by modeling a sequence of words within the word string class.

Accordingly, by treating each word string with a common property as a word string class and by using N-grams with the nesting structure when calculating language likelihood, it becomes possible to treat such word string class as a single unit in relation to the preceding and following words according to the class N-grams belonging to the upper layer, whereas within the class, it becomes possible to treat the word string class as a word string according to the word N-grams belonging to the lower layer. This makes it possible to realize a language model generation and accumulation apparatus and a speech recognition apparatus that are capable of providing compatibility between a prediction accuracy of language likelihood of a word string that has a long context and that constitutes a word string class and a compact recognition dictionary.

Moreover, in the language model generation and accumulation apparatus according to the present invention, the higher-level N-gram language model generation and accumulation unit and the lower-level N-gram language model generation and accumulation unit may generate the respective language models, using different corpuses.

Accordingly, since it becomes possible to construct the higher-level language model and the lower-level language model independently, the collection of corpuses is facilitated. Furthermore, even when the language models are required to be reconstructed due to changes in vocabularies, for example, only either the higher- or lower-level language model which requires reconstruction needs to be reconstructed, making it possible to achieve the effect that maintenance of the language models is carried out easily.

Furthermore, the lower-level N-gram language model generation and accumulation unit may include a corpus update unit operable to update the corpus for the lower-level N-gram language model, and the lower-level N-gram language model generation and accumulation unit may update the lower-level N-gram language model based on the updated corpus, and generates the updated lower-level N-gram language model.

This enables the title of a new program to be automatically stored into the corpus, making it possible to achieve the effect that maintenance of the language models is carried out more easily.

Also, in the language model generation and accumulation apparatus according to the present invention, the lower-level N-gram language model generation and accumulation unit may analyze the sequence of words within the word string class into one or more morphemes that are smallest language units having meanings, and generate the lower-level N-gram language model by modeling each sequence of said one or more morphemes in dependency on said word string class.

Accordingly, it becomes possible to obtain class dependent word N-grams from the word string that constitutes a word string class, making it possible to ensure a sufficient amount of training data and thus to achieve the effect that a high recognition accuracy is achieved.

Moreover, in the language model generation and accumulation apparatus according to the present invention, the higher-level N-gram language model generation and accumulation unit may substitute the word string class with a virtual word, and then generate the higher-level N-gram language model by modeling a sequence made up of said virtual word and the other words, said word string class being included in each of the plurality of texts analyzed into morphemes.

Accordingly, since class N-grams are obtained by taking into account both the text that includes a word string class with the definition of such word string class and a word string that constitutes the word string class, it is possible to achieve the effect that a high recognition accuracy can be achieved.

Moreover, in the language model generation and accumulation apparatus according to the present invention, the lower-level N-gram language model generation and accumulation unit includes an exception word judgment unit operable to judge whether or not a specific word out of the words that appear in the word string class should be treated as an exception word, based on a linguistic property of said specific word, and divides the exception word into ( i ) a syllable that is a basic phonetic unit constituting a pronunciation of said word and ( ii ) a unit that is obtained by combining syllables based on a result of said judgment, said exception word being a word not being included as a constituent word of the word string class, and the language model generation and accumulation apparatus further comprises a class dependent syllable N-gram generation and accumulation unit operable to generate class dependent syllable N-grams by modeling a sequence made up of the syllable and the unit obtained by combining syllables and by providing a language likelihood to said sequence in dependency on either the word string class or the linguistic property of the exception word, and accumulate said generated class dependent syllable N-grams, said language likelihood being a logarithm value of a probability.

Accordingly, since some of the words included in the word string class can be represented by smaller units, it becomes possible to prevent the number of vocabularies in the speech recognition dictionary from becoming large, and thus to achieve the effect that all types of word string classes can be recognized with high accuracy.

Furthermore, the language model generation and accumulation apparatus according to the present invention may further comprise a syntactic tree generation unit operable to perform morphemic analysis as well as syntactic analysis of a text, and generate a syntactic tree in which said text is structured by a plurality of layers, focusing on a node that is on said syntactic tree and that has been selected on the basis of a predetermined criterion, wherein the higher-level N-gram language model generation and accumulation unit generates the higher-level N-gram language model for syntactic tree, using a first subtree that constitutes an upper layer from the focused node, and the lower-level N-gram language model generation and accumulation unit generates the lower-level N-gram language model for syntactic tree, using a second subtree that constitutes a lower layer from the focused node.

By focusing on a specific node, it becomes possible to easily divide the syntactic tree, and then by taking into account both the evaluation of a longer text using the class N-grams and the evaluation of the word string that constitutes the word string class using the class dependent word N-grams, it becomes possible to achieve the effect that a high recognition accuracy can be achieved.

Also, in the language model generation and accumulation apparatus according to the present invention, the lower-level N-gram language model generation and accumulation unit may include a language model generation exception word judgment unit operable to judge a specific word appearing in the second subtree as an exception word based on a predetermined linguistic property, said exception word being a word not being included as a constituent word of any subtrees, and the lower-level N-gram language model generation and accumulation unit may generate the lower-level N-gram language model by dividing the exception word into ( i ) a syllable that is a basic phonetic unit constituting a pronunciation of said word and ( ii ) a unit that is obtained by combining syllables, and then by modeling a sequence made up of the syllable and the unit obtained by combining syllables in dependency on a location of the exception word in the syntactic tree and on the linguistic property of said exception word.

Moreover, in the language model generation and accumulation apparatus according to the present invention may further comprise a syntactic tree generation unit operable to perform morphemic analysis as well as syntactic analysis of a text, and generate a syntactic tree in which said text is structured by a plurality of layers, focusing on a node that is on said syntactic tree and that has been selected on the basis of a predetermined criterion, wherein the higher-level N-gram language model generation and accumulation unit generates the higher-level N-gram language model, using a first subtree that constitutes a highest layer of the syntactic tree, and the lower-level N-gram language model generation and accumulation unit may categorize each subtree constituting a layer lower than a second layer based on a positioning of said each subtree when included in the upper layer, and generates the lower-level N-gram language model by use of each of the categorized subtree.

Accordingly, it becomes possible to achieve the effect that both the class N-grams and the class dependent word N-grams are automatically generated from a large number of texts.

Furthermore, in the language model generation and accumulation apparatus according to the present invention, the lower-level N-gram language model generation and accumulation unit may include a language model generation exception word judgment unit operable to judge, as an exception word, a specific word appearing in any subtrees in a layer lower than the second layer based on a predetermined linguistic property, said exception word being a word not being included as a constituent word of any subtrees, and the lower-level N-gram language model generation and accumulation unit may divide the exception word into ( i ) a syllable that is a basic phonetic unit constituting a pronunciation of said word and ( ii ) a unit that is obtained by combining syllables, and generate the lower-level N-gram language model by modeling a sequence made up of the syllable and the unit obtained by combining syllables in dependency on a position of the exception word in the syntactic tree and on the linguistic property of said exception word.

Accordingly, it becomes possible to recognize some of the words that are defined on the basis of a specific relationship in the syntax by representing them as smaller units than word. Furthermore, it becomes also possible to achieve the effect that class dependent syllable N-grams are automatically constructed according to a result of syntactic analysis of a large number of texts, based on a specific relationship within the syntax.

Also, in the language model generation and accumulation apparatus according to the present invention, the higher-level N-gram language model generation and accumulation unit may generate the higher-level N-gram language model by associating each N-long chain of words constituting the word string class with a probability at which said each chain of words occurs.

By taking into account the evaluation of a longer text on the basis of the occurrence probability in the word string class, it becomes possible to achieve the effect of realizing a high recognition accuracy.

Moreover, in the language model generation and accumulation apparatus according to the present invention, the lower-level N-gram language model generation and accumulation unit generates the lower-level N-gram language model by associating each N-long chain of words constituting the word string class with a probability at which said each chain of words occurs.

By taking into account the evaluation of the word string that constitutes the word string class on the basis of the occurrence probability in the word string class, it becomes possible to achieve the effect that a high recognition accuracy is achieved.

Note that not only is it possible to embody the present invention as a language model generation and accumulation apparatus with the above configuration, but also as a speech recognition apparatus that includes the above language model generation and accumulation apparatus, as a language model generation method and a speech recognition method that include, as theirs steps, the characteristic units included in the language model generation and accumulation apparatus and the speech recognition apparatus, as well as a program that causes a computer to execute such steps. It should be also noted that such program can be distributed on recording media such as CD-ROM and via transmission media such as the Internet.

As is obvious from the above description, in the language model generation and accumulation apparatus and the speech recognition apparatus according to the present invention, a word string with the common property is treated as a word string class, when calculating a language likelihood. Accordingly, using N-grams with a nesting structure, it becomes possible to treat such word string class as a one word with respect to its preceding and following words by use of class N-grams belonging to an upper layer, whereas words inside the class is treated as a sequence of words by use of word N-grams belonging to a lower layer. This makes it possible to obtain an effect of achieving compatibility between a compact recognition dictionary and a prediction accuracy of linguistic likelihoods related to long contexts and word strings that constitute word string classes.

Thus, the present invention is capable of offering a higher recognition accuracy, meaning that the present invention is highly valuable in terms of practicability in the present age in which there is a proliferation of home appliances supporting speech recognition.

**Brief Description of Drawings**

FIG. 1 is a diagram showing a speech recognition apparatus according to a conventional art.
FIG. 2 is a diagram showing a configuration of a speech recognition apparatus according to a first embodiment of the present invention.
FIG. 3 is a diagram showing a configuration of a class N-gram generation and accumulation unit according to the first embodiment of the present invention.
FIG. 4 is a diagram showing an exemplary configuration of a sentence/phrase corpus accumulation unit 111.

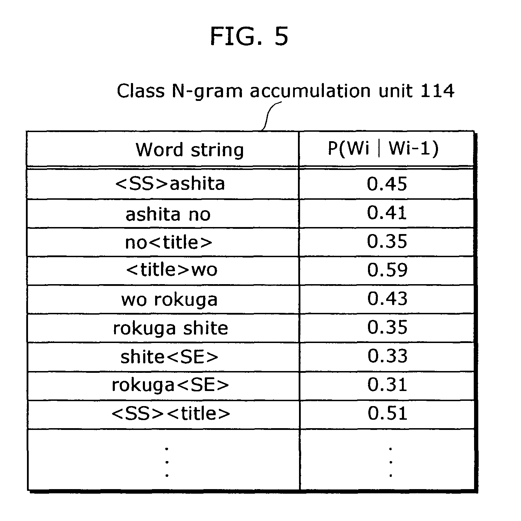

FIG. 5 is a diagram showing an exemplary configuration of a class N-gram accumulation unit 114.
FIG. 6 is a diagram showing a configuration of a class dependent word N-gram generation and accumulation unit according to the first embodiment of the present invention.
FIG. 7 is a diagram showing an exemplary configuration of a class corpus unit 121.
FIG. 8 is a diagram showing an exemplary configuration of a class dependent word N-gram accumulation unit 124.
FIG. 9 is a diagram showing an exemplary configuration of a word string class definition and accumulation unit 126.
FIG. 10 is a flowchart showing an operation of speech recognition processing.
FIG. 11 is a diagram showing word string hypotheses evaluated by a word string hypothesis generation unit 80.
FIG. 12 is a diagram showing a configuration of a speech recognition apparatus according to a second embodiment.
FIG. 13 is a diagram showing a configuration of a syntactic tree generation unit according to the second embodiment.
FIG. 14 is a diagram showing a configuration of a syntactic tree class N-gram generation and accumulation unit according to the second embodiment.
FIG. 15 is a diagram showing a configuration of a syntactic tree class dependent word N-gram generation and accumulation unit according to the second embodiment.
FIG. 16A is a diagram showing a result of a syntactic analysis according to the second embodiment.
FIG. 16B is a diagram showing a syntactic tree that has been divided according to the second embodiment.
FIG. 17 is a diagram showing a configuration of a speech recognition apparatus according to a third embodiment.
FIG. 18 is a diagram showing a configuration of a class N-gram generation and accumulation unit according to the third embodiment.
FIG. 19 is a diagram showing a configuration of a class dependent word N-gram generation and accumulation unit according to the third embodiment.
FIG. 20 is a diagram showing a configuration of a class dependent syllable N-gram generation and accumulation unit according to the third embodiment.
FIG. 21 is a diagram showing an exemplary configuration of a class dependent syllable N-gram accumulation unit 332.
FIG. 22 is a diagram showing a word string being evaluated by the word string hypothesis generation unit 80.
FIG. 23 is a diagram showing a configuration of a class dependent word N-gram generation and accumulation unit according to a fourth embodiment.

**Best Mode for Carrying Out the Invention**

The following describes the embodiments of the present invention with reference to the drawings.

(First Embodiment)

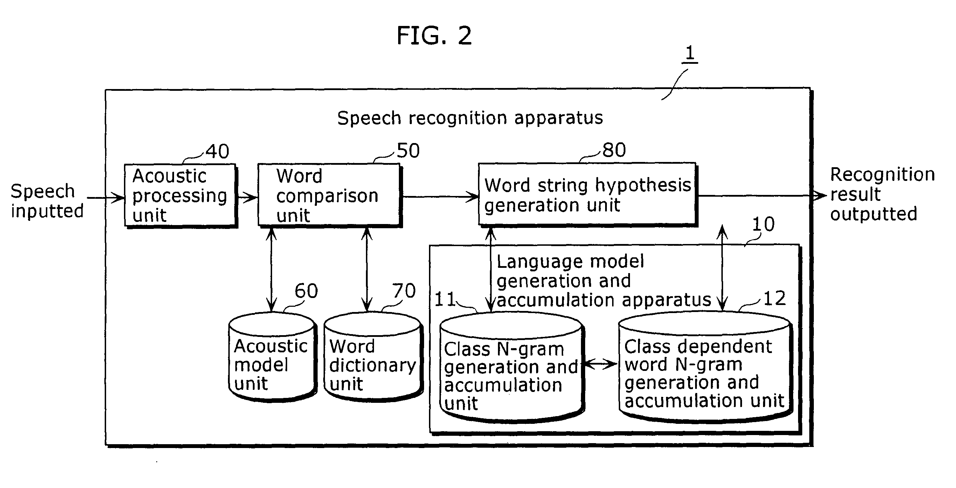

FIG. 2 is a functional block diagram showing the configuration of a speech recognition apparatus according to the first embodiment of the present invention.
As FIG. 2 shows, a speech recognition apparatus 1 is comprised of: a language model generation and accumulation apparatus 10; an acoustic processing unit 40 that captures an input utterance and extracts feature parameters; an acoustic model unit 60 that is a modeled acoustic feature of a specified or unspecified speaker; a word dictionary unit 70 that describes the pronunciations of words to be recognized; a word comparison unit 50 that compares the feature parameters against each word with reference to the acoustic model and the word dictionary; and a word string hypothesis generation unit 80 that generates word string hypotheses from each result of word comparison with reference to the class N-grams and the class dependent word N-grams of the language model generation and accumulation apparatus 10, and obtains a recognition result.

The language model generation and accumulation apparatus 10 is comprised of: a class N-gram generation and accumulation unit 11 that generates class N-grams for providing contexts including a word string class with language likelihood which is a logarithm value of a linguistic probability and that accumulates the generated class N-grams; and a class dependent word N-gram generation and accumulation unit 12 that generates class dependent N-grams for providing a sequence of words inside a word string class with language likelihood which is a logarithm value of a linguistic probability and that accumulates the generated class dependent word N-grams.

Next, speech recognition operation is explained. The speech recognition operation is roughly divided into pre-processing for generating language models and recognition processing for sequentially recognizing an input utterance.

First, descriptions are given of the configurations of the class N-gram generation and accumulation unit 11 and the class dependent word N-gram generation and accumulation unit 12 of the language model generation and accumulation apparatus 10, respectively.

Note that a language model, which is made up of class N-grams for evaluating a sequence of words and a word string class as well as of class dependent word N-grams for evaluating a sequence of words that constitute a word string class, is prepared in advance before speech recognition processing is carried out.

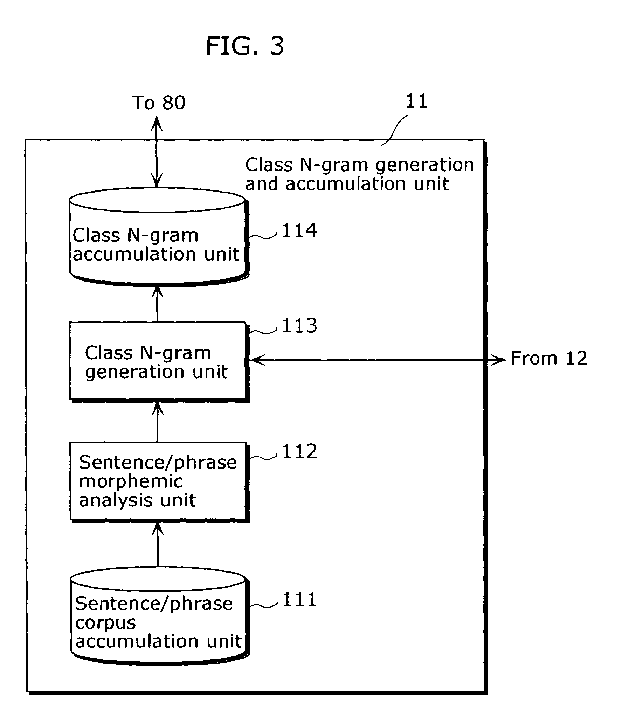

First, referring to FIG. 3, a detailed description is given of the generation of class N-grams.

FIG. 3 is a block diagram showing a functional configuration of the class N-gram generation and accumulation unit 11.

As FIG. 3 shows, the class N-gram generation and accumulation unit 11 is comprised of: a sentence/phrase corpus accumulation unit 111 in which many sentences and phrases to be recognized are accumulated as texts; a sentence/phrase morphemic analysis unit 112 that performs morphemic analysis of sentences/phrases; a class N-gram generation unit 113 that determines the statistics of each chain of words and word string classes from the result of morphemes by reference to the definitions of word string classes, so as to generate class N-grams; and a class N-gram accumulation unit 114 that accumulates class N-grams and output them to the word string hypothesis generation unit 80.

The sentence/phrase corpus accumulation unit 111 of the class N-gram generation and accumulation unit 11 accumulates in advance many data libraries of sentences and phrases to be recognized.

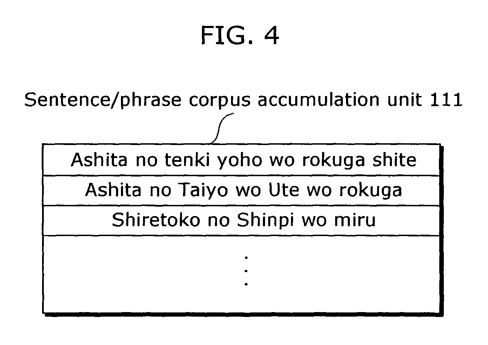

To be more specific, as shown in FIG. 4, the sentence/phrase corpus accumulation unit 111 stores, in advance, relatively long texts such as sentences/phrases like "Ashita no tenki yoho wo rokuga shite (record the weather forecast for tomorrow onto a videotape)", "Ashita no Taiyo wo Ute wo rokuga (record onto a video tape *Taiyo wo Ute* to be broadcast tomorrow)", and "Shiretoko no Shinpi wo miru (watch *Shiretoko no Shinpi*)".

The sentence/phrase morphemic analysis unit 112 analyzes the morphemes, which are the smallest language units having meanings, from a relatively long sentence/phrase stored in the sentence/phrase corpus accumulation unit 111, such as "Ashita no tenki yoho wo rokuga shite". For example, the morphemic analysis of the above sentence/phrase "Ashita no tenki yoho wo rokuga shite" gives "<SS> ashita no tenki yoho wo rokuga shite <SE>". Similarly, "Ashita no Taiyo wo Ute wo rokuga" and "Shiretoko no Shinpi wo miru" are analyzed as "<SS> ashita no taiyo-wo-ute wo rokuga <SE>" and "<SS> shiretoko-no-shinpi wo miru <SE>". Here, <SE> and <SS> are virtual words that denote the beginning of a sentence and the end of a sentence, respectively.

Next, the class N-gram generation unit 113 extracts word strings included in a text analyzed into morphemes, refers to word string classes that are inputted from the class dependent word N-gram generation and accumulation unit 12 to be described later. When there exists a matching word string class, the class N-gram generation unit 113 substitutes the word string class included in the text into a virtual word, and generates class N-grams for which chains of words or word string classes and their probabilities are associated with each other, by determining the statistics of the chains of words or word string classes. The sentence/phrase that is divided on a morpheme-by-morpheme basis is substituted, in the class N-gram generation unit 113, with a virtual word representing a word string class defined as a word string class with reference to the definitions of word string classes, and then the frequency is measured for each chain of one to N words, and then a probability model is generated. This class is referred to as word string class. Class N-grams generated by the class N-gram generation unit 113 are accumulated in the class N-gram accumulation unit 114.

For example, in the case where "tenki-yoho" is defined in the word string class <title>, a result of morphemic analysis is substituted as "<SS> ashita no <title> wo rokuga shite <SE>". Similarly, in the case where "Taiyo-wo-Ute" and "Shiretoko-no-Shinpi" are defined in the word string class <title>, results of morphemic analyses are substituted respectively as "<SS> ashita no <title> wo rokuga <SE>" and "<SS> <title> wo miru <SE>". Furthermore, in the case of conditional probability of word trigram model, the probability that W3 follows a chain of W1 W2 is determined by $P(W3 \mid W1, W2)$=(frequency of the chain of W1, W2, and W3)/(frequency of a chain of words W1 and W2) indicating that the frequency of a chain of a set of three words W1 W2 W3 is divided by the frequency of a chain of a set of two words W1 W2. Similarly, in the case of word bigram model, conditional probability is determined by P(W2 | W1)= (frequency of the chain of W1 and W2)/(frequency of W1).

More specifically, in the case of word bigram model, the class N-gram generation unit 113 determines the frequency of each of <SS> ashita, ashita no, no <title>, <title> wo, wo rokuga, rokuga shite, shite <SE>, <SE> ashita, ashtia no, no <title>, <title> wo, wo rokuga, rokuga <SE>, <SS> <title>, <title> wo, wo miru ,and miru <SE>,... and determines the probability P(W2 |W1) of each of them by calculating P(frequency of the chain of W1 and W2)/(frequency of W1).

Accordingly, by measuring the frequency of each chain of words, it becomes possible to calculate conditional probabilities as well as to treat word string classes similarly as words, which realizes a language model that is added with the conditional probability of each word. As a result, class N-gram plays a role of adding the conditional probability to each word by being substituted as: "<SS> ashita no <title> wo rokuga shite <SE>".

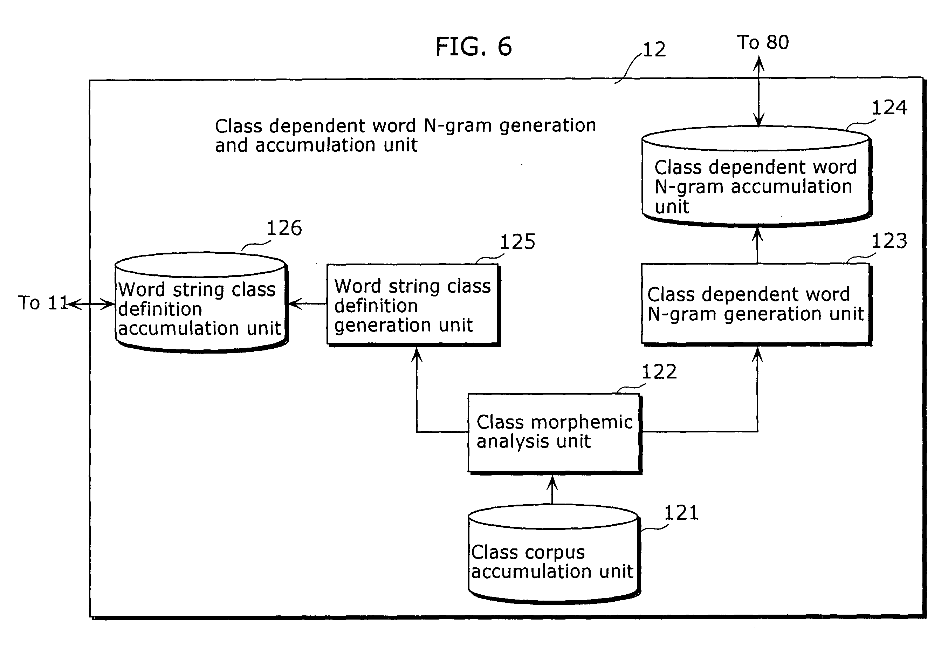

Next, referring to FIG. 6, a detailed description is given of the generation of class dependent word N-grams.

FIG. 6 is a block diagram showing a functional configuration of the class dependent word N-gram generation and accumulation unit 12.

As FIG. 6 shows, the class dependent word N-gram generation and accumulation unit 12 is comprised of a class corpus accumulation unit 121, a class morphemic analysis unit 122, a class dependent word N-gram generation unit 123, a class dependent word N-gram accumulation unit 124, a word string class definition generation unit 125, and a word string class definition accumulation unit 126.

The class corpus accumulation unit 121 accumulates, in advance, data libraries of word strings whose semantic properties and syntactic properties are the same (e.g. title of television program and personal name, etc.).

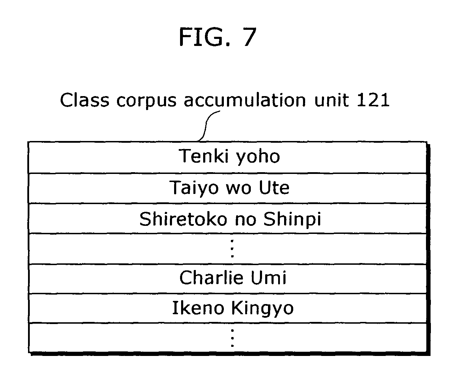

More specifically, as shown in FIG. 7, the class corpus accumulation unit 121 accumulates, in advance, titles such as "Tenki yoho (weather forecast)", "Taiyo wo Ute", and "Shiretoko no Shinpi" as well as word strings such as "Charlie Umi" and "Ikeno Kingyo". Such word strings as above are inputted in advance on the basis, for example, of a list of programs to be broadcast in the future.

The class morphemic analysis unit 122 performs morphemic analysis of a class corpus. More specifically, the class morphemic analysis unit 122 analyzes, on a morpheme basis, word strings accumulated in the class corpus accumulation unit 121 which are relatively short and have common properties, such as a television program name like "Tenki yoho". For example, morphemic analysis of the word string "Tenki yoho" gives "<CS> tenki-yoho <CE>". Here, <CS> and <CE> are virtual words that denote the beginning of a word string class and the end of a word string class, respectively.

The class dependent word N-gram generation unit 123 performs processing on the results of morphemic analyses, determines the statistics of each chain of words, and generates class dependent word N-grams being information in which word strings and their probabilities are associated with each other. More specifically, the class dependent word N-gram generation unit 123 measures the frequency of each chain of words in the input word strings that are divided on a morpheme basis, defines them as a probability model, generates class dependent word N-grams, and accumulates the generated class dependent word N-grams in the class dependent word N-gram accumulation unit 124.

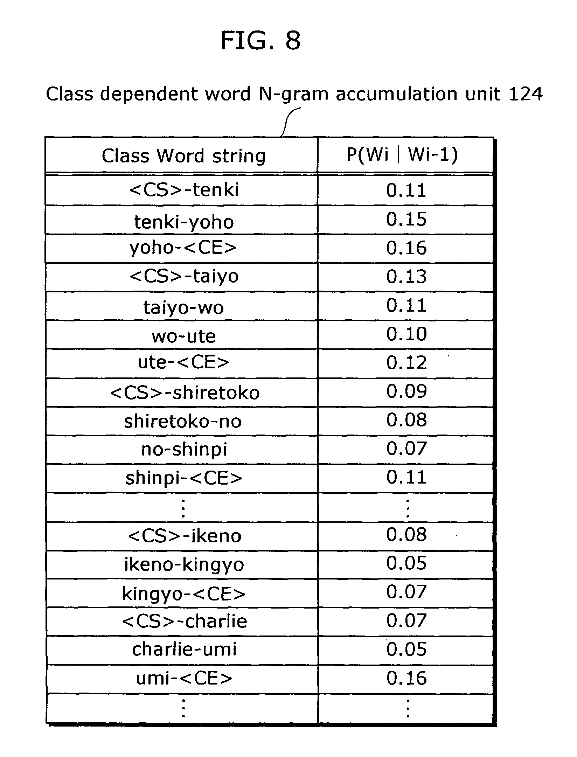

To be more specific, in the case of word bigram model, the class dependent word N-gram generation unit 123 determines the frequency of each of the titles, <CS> tenki, tenki-yoho, yoho <CE>, <CS> taiyo, taiyo-wo, wo-ute, ute <CE>, <CS> shiretoko, shiretoko-no, no-shinpi, shinpi <CE>,... and determines the probability P(W2 |W1) of each of them by calculating (frequency of the chain of W1 and 2)/(frequency of W1). The same is applicable to personal names. Then, as shown in FIG. 8, the class dependent word N-gram generation unit 123 accumulates word strings and their probabilities in association with each other in the class dependent word N-gram accumulation unit 124. As a result, word strings which are divided into morphemes by the class dependent word N-gram generation unit 123, serve as a stochastically modeled language model, by measuring the frequency of each chain of words as in the case of class N-grams.

The class dependent word N-gram accumulation unit 124 accumulates the class dependent word N-grams generated by the class dependent N-gram generation unit 123. Such class dependent word N-grams accumulated in the class dependent word N-gram accumulation unit 124 are referred to by the word string hypothesis generation unit 80 at the time of speech recognition.

The word string class definition generation unit 125 generates the definitions of the respective word string classes in which word strings with common properties are defined as classes on the basis of the results of morphemic analyses of the class corpus. More specifically, the word string class definition generation unit 125 generates the definitions of the respective word string classes in which word strings with common properties are defined as classes based on the word strings that are analyzed on a morpheme-by-morpheme basis. Here, as word string classes, there are "Tenki yoho", "Taiyo wo Ute", and the like in the corpus that is a collection of word strings being titles. Word strings such as "Tenki yoho", "Taiyo wo Ute", and the like are defined as <title> class.

The word string class definition accumulation unit 126 accumulates the definitions of word string classes generated by the word string class definition generation unit 125. Such definitions of word string classes are referred to by the class N-gram generation unit 113 of the class N-gram generation and accumulation unit 11 at the time of generating the above-described class N-grams.

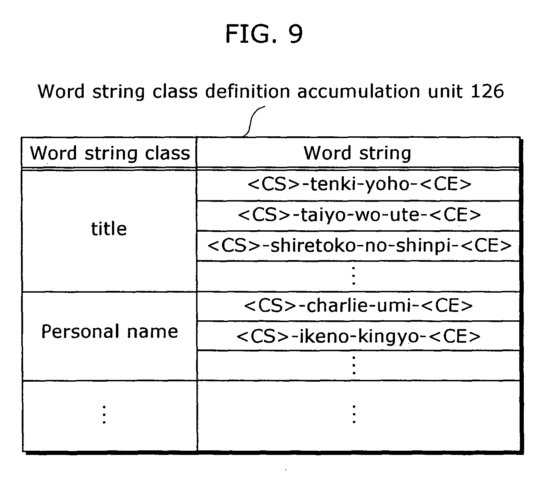

In other words, the word string class definition generation unit 125 defines <CS> tenki, tenki-yoho, yoho <CE>, <CS> taiyo, taiyo-wo, wo-ute, ute <CE>, <CS> shiretoko, shiretoko-no, no-shinpi, shinpi <CE>,... as "title", whereas defines <CS> charlie-umi <CS>, <CS> ikeno-kingyo <CE>... as personal names. Then, as shown in FIG. 9, the word string class definition generation unit 125 accumulates the word strings and their word string classes in association with each other in the word string class definition accumulation unit 126. Accordingly, it becomes possible for the class N-gram generation unit 113 to obtain an appropriate word string class.

Next, a description is given of the recognition processing for sequentially recognizing an input utterance.

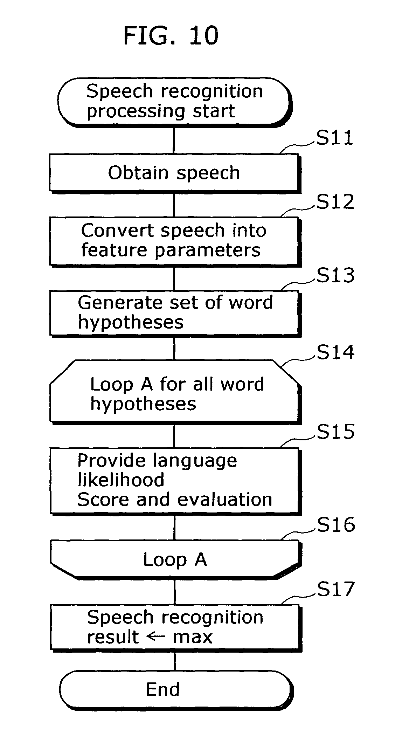

FIG. 10 is a flowchart showing the operation of speech recognition processing.

The acoustic processing unit 40, upon obtaining an input utterance inputted from a microphone or the like (S11), converts such utterance into feature parameters (S12). Here, exemplary feature parameters are LPC cepstrum that is obtained by linear prediction analysis and MFCC (Mel Filtered Cepstrum Coefficient). The word comparison unit 50 performs matching between the converted feature parameters and each of the words in the word dictionary, with reference to the acoustic model unit 60 and the word dictionary unit 70, converts them into a set of word hypotheses made up of the utterance segment of each word and the acoustic likelihood of each word (S13). Here, an exemplary acoustic model is HMM (Hidden Markov Model) that is a probability model for isolated word, to which acoustic likelihood is provided. Here, the feature parameters of an input utterance serve as acoustic units such as syllables. Meanwhile, algorithms used for matching include the Viterbi algorithm.

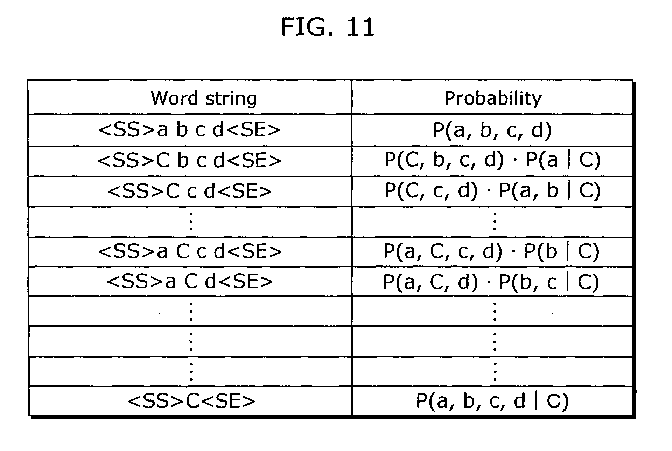

Then, the word string hypothesis generation unit 80 formulates each of all sets of word hypotheses into a word string hypothesis which is a result of concatenating words in consideration of word segments (S14) and to which language likelihood to be described below is provided with reference to the class N-grams and class dependent word N-grams. In the above manner, the word comparison unit 50 evaluates word string candidates which have been ranked by use of the criteria (scores) that are evaluated by a primary expression and determined by acoustic likelihood provided by the word string hypothesis generation unit 80 as well as language likelihood (S15, 16). More specifically, assuming that a certain word string hypothesis is a, b, c, and d, the word string hypothesis generation unit 80, as shown in FIG. 11, evaluates the following probabilities on a round robin basis: the probability P(a, b, c, d) of the word string <SS> a b c d <SE> that does not include any classes; the probability P(C, b, c, d)•P(a | C) of the word string <SS> C b c d <SE> in which a is class C; the word string P(C, c, d)• P(a, b | C) in which a and b are class C,..., the probability P(a, b, c, d | C) of the word string <SS> C <SE> in which a, b, c, and d are class C. Then, the word string hypothesis generation unit 80 selects, as a speech recognition result, the maximum value max of the scores, and terminates the speech recognition processing.

Note that in the first embodiment, although a word string hypothesis is generated after word comparison completes, it is also possible to perform word comparison and the generation of word string hypothesis in parallel.

Next, a description is given of a method for calculating language likelihood.

A description is given here of the case where one preceding word is used, but it should be noted that it is also possible to carry out the invention in the case where two preceding words are used.

First, the language likelihood of an arbitrary word string W1, W2,..., WL is computed by the following equation (6):

$$\log P(W1, W2, \cdots, WL) \doteqdot \sum_{i=1}^{L} \log P\{Wi \mid W(i-1)\} \qquad \cdots (6)$$

The probability of the right side of the above equation (6) is determined by the following equation (7):

$$P(Wi \mid W(i\text{-}1)) = \begin{cases} P1(Wi \mid W(i\text{-}1)) \\ \qquad \text{when both are ordinary words} \\ P1(Ci \mid W(i\text{-}1)) \times P2(Wi \mid Ci) \\ \qquad \text{when only } Wi \text{ is class word} \\ P2(Wi \mid W(i\text{-}1)) \\ \qquad \text{when both are class words} \\ P2(CS \mid W(i\text{-}1)) \times P1(Wi \mid C(i\text{-}1)) \\ \qquad \text{when only } W(i\text{-}1) \text{ is class word} \end{cases}$$

$$\cdots(7)$$

Here, P1 denotes the probability that is based on a class N-gram, whereas P2 is the probability that is based on a class dependent word N-gram. Furthermore, words included as word string classes in which word strings having common properties are given the same class symbol, are referred to as class words, whereas other words are referred to as ordinary words. In general, however, since it is difficult to determine whether a specific word is a class word or an ordinary word, it is also possible to use, as the value of the left hand value, the result of adding up the four probabilities in equation (7).

The language likelihood determined in the above manner is added to the formulated word string hypothesis. Then, the word string candidates are ranked and outputted as recognition results.

Taking an example utterance of "Ashita no Taiyo wo Ute wo rokuga" in the case of recording onto a video tape "Taiyo wo Ute" that is a television program name, the following describes the effects of the present invention as well as clear differences between an exemplary calculation of the conventional arts and a formula according to the present invention.

First, a description is given of three methods of dividing the exemplary sentence into a string of words.

There are two cases: a first case "Ashita no taiyo-wo-ute wo rokuga" where the television program name is treated as one word; and a second case "Ashita no taiyo wo ute wo rokuga", where the television program name is divided into three words.

First, a calculation is performed for the word bigram model of the first case by equation (8).

$$P(<SS>ashita\ no\ taiyo\text{-}wo\text{-}ute\ wo\ rokuga<SE>\ )$$

$$\doteqdot$$

$$P(ashita \mid <SS>) \times P(no \mid ashita) \times P(taiyo\text{-}wo\text{-}ute \mid no)$$
$$\times P(wo \mid taiyo\text{-}wo\text{-}ute) \times P(rokuga \mid wo) \times P(<SE> \mid rokuga)$$

$$\cdots(8)$$

In this model, the size of a recognition dictionary becomes large because of a large number of television program names made up of the combination of plural words, as in the case of "Taiyo wo Ute".

Next, a calculation is performed for the word bigram model of the second case by equation (9).

$$P(<SS>ashita\ no\ taiyo\text{-}wo\text{-}ute\ wo\ rokuga<SE>)$$

$$\doteqdot$$

$$P(ashita|\ <SS>)\times P(no|\ ashita)\times P(taiyo|\ no)\times P(wo|\ taiyo)\times$$
$$P(ute|\ wo)\times P(wo|\ ute)\times P(rokuga|\ wo)\times P(<SE>|\ rokuga)$$
$$\cdots(9)$$

Each of the above probabilities is learned from the sentence/phrase corpus accumulation unit 111 that includes television program names. However, since it is difficult to prepare satisfactory training data, the amount of data in the training data becomes insufficient. Therefore, the accuracy of not the acoustic probabilities of some of the word sequences, but their linguistic probabilities and probabilities related to chains of words, are degraded.

In equation (9), in particular, the reliability of the probabilities of the following are low: the context P (taiyo | no) of the television program name and the preceding word; the context P (wo | ute) of the television program name and the following word; and the contexts P (wo | taiyo) and P(ute | wo) within the television program name.

The use of classified words makes it possible to cope with the problem as above caused by an insufficient amount of data.

In the first case, if the television program name portion is treated as a class, the following equation (10) is obtained

$$P(<SS>ashita\ no\ taiyo\text{-}wo\text{-}ute\ wo\ rokuga<SE>)$$

$$\doteqdot$$

$$P(ashita|\ <SS>)\times P(no|\ ashita)\times P(<title>|\ no)\times$$
$$P(taiyo\text{-}wo\text{-}ute|\ <title>)\times P(wo|\ <title>)\times P(rokuga|\ wo)\times$$
$$P(<SE>|\ rokuga)\qquad\cdots(10)$$

While it is possible to cope with the problem caused by an insufficient amount of data since the preceding and following contexts of the television program name are represented as P(<title>| no) and P(wo |<title>), a recognition dictionary still becomes large because of a large number of television program names, as in the case of "Taiyo wo Ute".

Furthermore, the use of the third conventional art as a third method gives the following equation (11):

$$P(<SS>ashita\ no\ taiyo\text{-}wo\text{-}ute\ wo\ rokuga<SE>)$$

$$\doteqdot$$

$$P(ashita|\ <SS>)\times P(no|\ ashita)\times P(<title>|\ no)\times P(ta|\ <TS>)\times$$
$$P(i|\ ta)\times P(yo|\ i)\times P(u|\ yo)\times P(wo|\ u)\times P(u|\ wo)\times P(te|\ u)$$
$$P(<TE>|\ te)\times P(wo|\ <title>)\times P(rokuga|\ wo)\times P(<SE>|\ rokuga)$$
$$\cdots(11)$$

With this, it is possible to cope with the problem caused by an insufficient amount of data since the preceding and following contexts of the television program name are represented as P(<title>| no) and P(wo |<titte>), and the size of a recognition dictionary is small since the television program name is represented as a string of syllables.

However, the fact that the television program name is represented by a string of syllables makes it impossible to achieve an accuracy of recognition because of loose restrictions. Especially in the case where a television program name is long, it is difficult to recognize all the syllables correctly.

In the third conventional art, it is possible to treat a few syllables as one unit. However, while syllables can be associated with semantic roles and syntactic roles if they are units that are morphemes such as words and the like, there is a problem that syllable strings representing pronunciations cannot be associated with such roles and homonyms need to share the same meaning.

In response to the above problems, the first embodiment of the present invention performs calculation using the following equation (12):

$$P(\text{<SS>}ashita\ no\ taiyo\text{-}wo\text{-}ute\ wo\ rokuga\text{<SE>})$$

$$\doteqdot$$

$$\begin{aligned}
&P(ashita|\text{<SS>}) \times P(no|ashita) \times P(\text{<title>}|no) \times P(taiyo|\text{<CS>}) \times \\
&\times P(wo|taiyo) \times P(ute|wo) \times P(\text{<CE>}|ute) \times P(wo|\text{<title>}) \times \\
&P(rokuga|wo) \times P(\text{<SE>}|rokuga)
\end{aligned}$$

$$\cdots(12)$$

With this, it is possible to cope with the problem caused by an insufficient amount of data since the preceding and following contexts of the television program name are represented as P(<title>| no) and P(wo |<title>), and the size of recognition dictionaries (the class N-gram accumulation unit 114 and the class dependent word N-gram accumulation unit 124) is small since the television program name is represented as a string of morphemes. What is more, by representing the television program name by a string of morphemes, it is possible to ensure a higher recognition performance than in the case where it is represented by a string of syllables.

Moreover, regarding the problem that the probability of each of the television program name portions is lower than the probabilities of the other portions and that the television program portions are therefore hard to be recognized, it is possible to make adjustment in consideration of the likelihoods of the other candidates of a speech recognition result and therefore to improve the accuracy of recognition by performing the following: add, as an offset, the difference between the representative probability value that is based on class N-grams and the representative probability value that is based on class dependent word N-grams to the probability based on the class dependent word N-gram; and reduce the offset after the likelihood for speech recognition of the entire utterance segments is calculated.

(Second Embodiment)

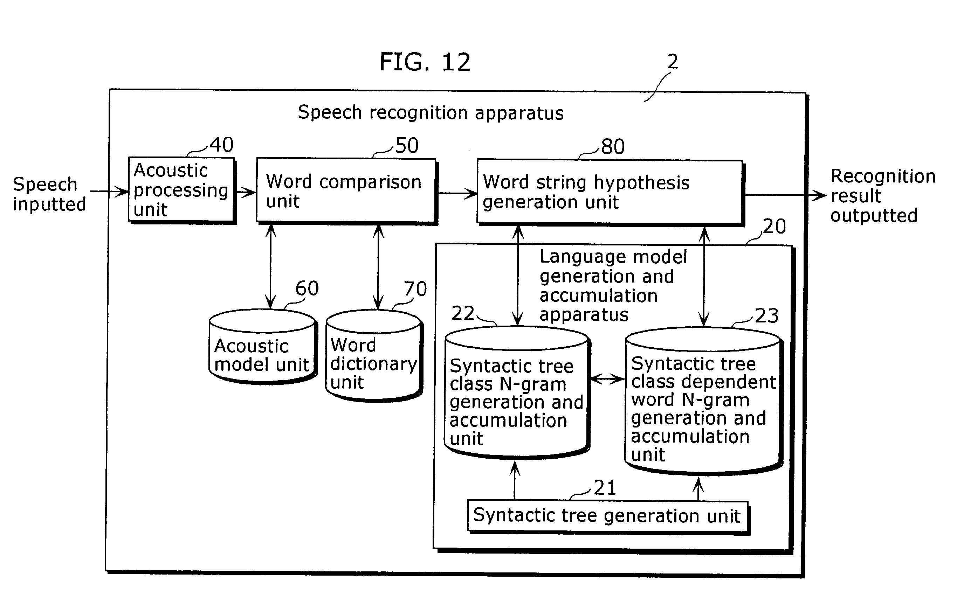

FIG. 12 is a block diagram showing a functional configuration of a speech recognition apparatus according to the second embodiment of the present invention. Note that the same numbers are assigned to components that correspond to those of the language model generation and accumulation apparatus 10 and the speech recognition apparatus 1, and descriptions thereof are omitted.

As FIG. 12 shows, the speech recognition apparatus 2 is comprised of: a language model generation and accumulation apparatus 20 that is used instead of the language model generation and accumulation apparatus 10 of the above-described speech recognition apparatus 1; the acoustic processing unit 40; the word comparison unit 50; the acoustic model unit 60; the word dictionary unit 70; and the word string hypothesis generation unit 80.

The language model generation and accumulation apparatus 20, which is intended for generating class N-grams and class dependent word N-grams by analyzing the syntax of a sentence/phrase by use of a syntactic analysis algorithm in the pre-processing for generating language models, is comprised of: a syntactic tree generation unit 21 that performs syntactic analysis of a sentence/phrase being a text, and generates a syntactic tree that hierarchically shows the structure of the text; a syntactic tree class N-gram generation and accumulation unit 22 that generates class N-grams from the input sentence/phrase, and accumulates them; and a syntactic tree class dependent word N-gram generation and accumulation unit 23 that generates class dependent word N-grams from the input sentence/phrase, and accumulates them. Note that the syntactic tree class N-gram generation and accumulation unit 22 and the syntactic tree class dependent word N-gram generation and accumulation unit 23 output class N-grams and class dependent word N-grams to the word string hypothesis generation unit 80 at the request of the word string hypothesis generation unit 80.

Next, a detailed description is given of the syntactic tree generation unit 21.

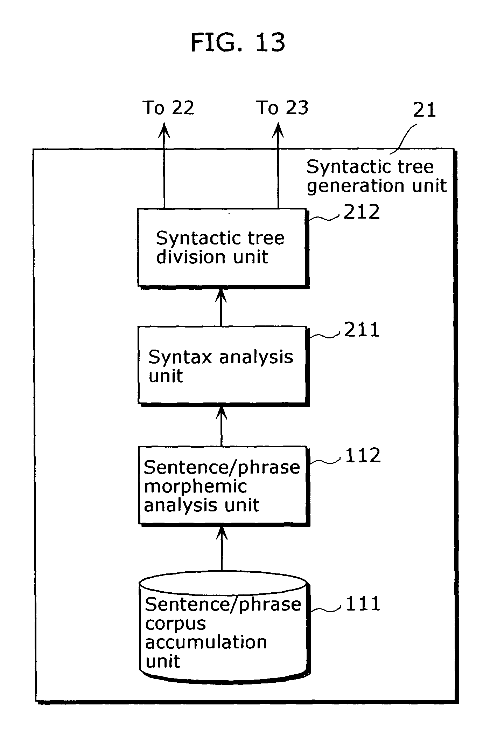

FIG. 13 is a block diagram showing a functional configuration of the syntactic tree generation unit 21.

As FIG. 13 shows, the syntactic tree generation unit 21 includes a syntax analysis unit 211 and a syntactic tree division unit 212, in addition to the above-described sentence/phrase corpus accumulation unit 111 and sentence/phrase morphemic analysis unit 112.

The syntax analysis unit 211 analyzes the syntax of a sentence that has been analyzed into morphemes.

The syntactic tree division unit 212 indicates a node selection unit for selecting a node in a syntactic tree, and divides the syntactic tree into a first subtree that constitutes the upper layer and a second subtree that constitutes the lower layer, with respect to such selected node.

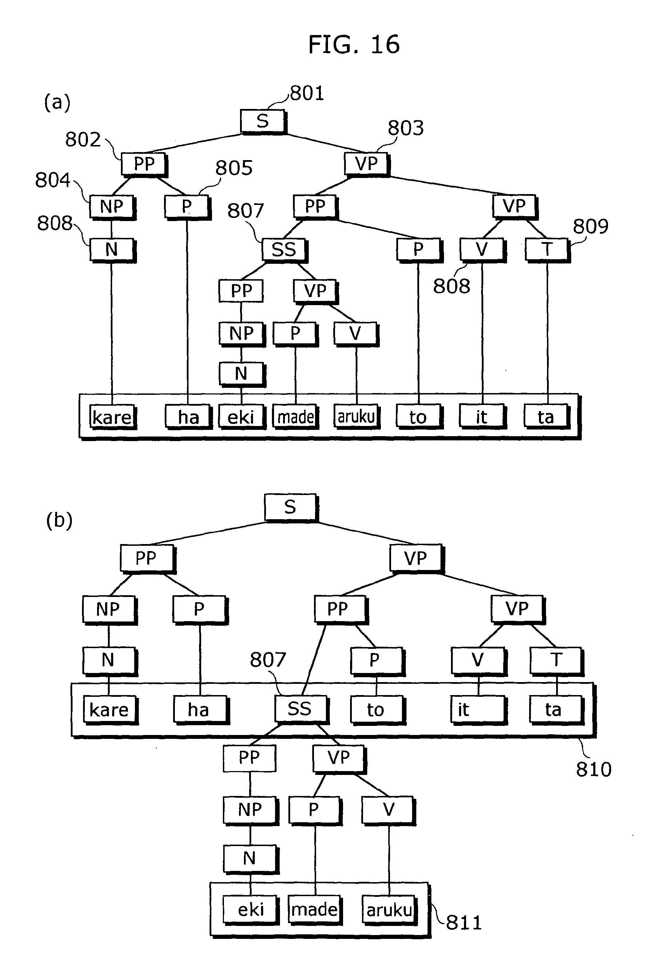

For example, in the case where "Kare ha eki made aruku to it ta (He said he would walk to the station)", the sentence/phrase morphemic analysis unit 112 analyzes it into "Kare ha eki made aruku to it ta". The syntax analysis unit 211 analyzes it using a publicly known syntax analysis algorithm such as CYK, and obtains a syntactic tree that is a result of the syntax analysis representing the structure of a text, as shown in FIG. 16(a). Note that in FIG. 16(a), S801 denotes a sentence, SS807 denotes a sub-sentence, PP 802 denotes a postpositional phrase, VP803 denotes a verb phrase, NP 804 denotes a noun phrase, P805 denotes a postposition, V808 denotes a verb, N806 denotes a noun, and T809 denotes a tense.

Here, the syntactic tree division unit 212 is previously set so as to select the node "SS807". The syntactic tree division unit 212 substitutes the portion corresponding to the node "SS807" with "SS" as a virtual word, and converts the syntactic tree into a two-layered syntactic tree as shown in FIG. 16(b). Note that in FIG. 16(b), 810 denotes a first subtree that constitutes the upper layer with respect to the selected SS node, whereas 811 denotes a second subtree that constitutes the lower layer with respect to the selected SS node.

Next, the syntactic tree division unit 212 outputs, to the syntactic tree class N-gram generation and accumulation unit 22, "kare ha SS to it ta" that is the first subtree 810, and outputs, to the syntactic tree class dependent word N-gram generation and accumulation unit 23, "eki made aruku" that is the second subtree 811.

Next, a detailed description is given of the syntactic tree class N-gram generation and accumulation unit 22.

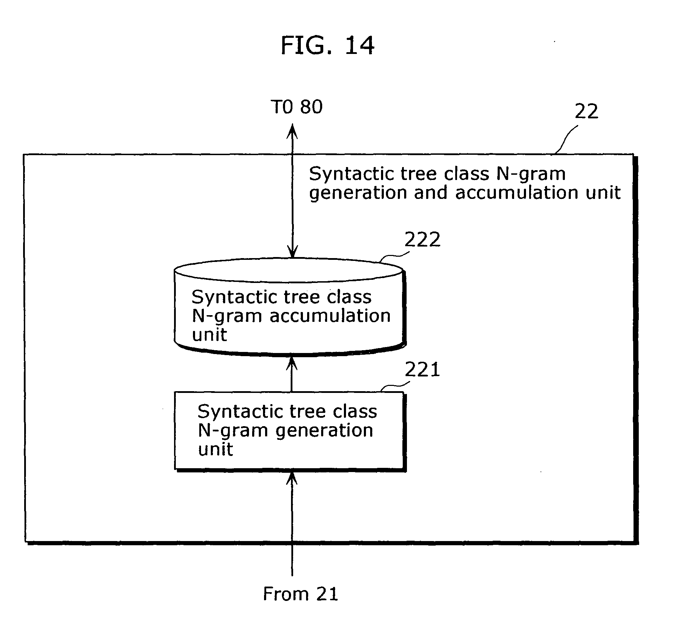

FIG. 14 is a block diagram showing a functional configuration of the syntactic tree class N-gram generation and accumulation unit 22.

As FIG. 14 shows, the syntactic tree class N-gram generation and accumulation unit 22 is comprised of a syntactic tree class N-gram generation unit 221 and a syntactic tree class N-gram accumulation unit 222.

The syntactic tree class N-gram generation unit 221 generates class N-grams by providing a conditional probability to each of the words that include "SS" and that are regarded by the syntactic tree division unit 212 as words. The syntactic tree class N-gram accumulation unit 222 accumulates the class N-grams generated by the syntactic tree class N-gram generation unit 221.

Next, a description is given of the syntactic tree class dependent word N-gram generation and accumulation unit 23.

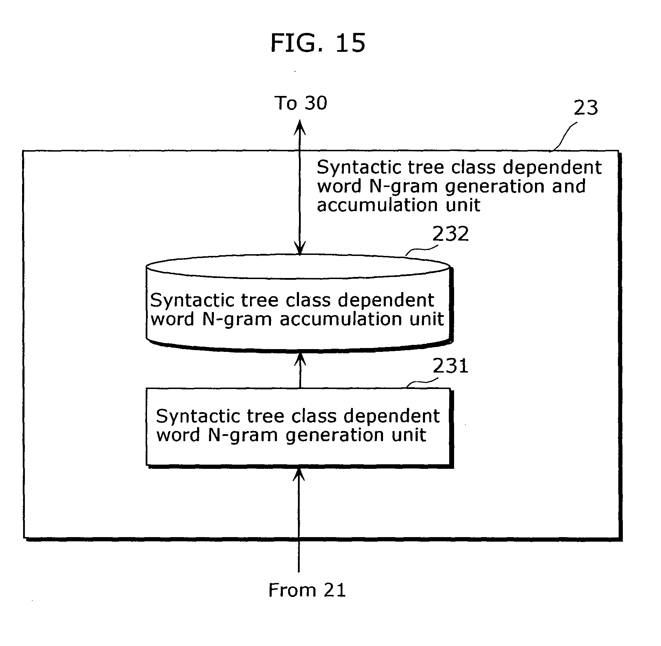

FIG. 15 is a block diagram showing a functional configuration of the syntactic tree class dependent word N-gram generation and accumulation unit 23.

As FIG. 15 shows, the syntactic tree class dependent word N-gram generation and accumulation unit 23 is comprised of a syntactic tree class dependent word N-gram generation unit 231 and the syntactic tree class dependent word N-gram accumulation unit 232.

The syntactic tree class dependent word N-gram generation unit 231 generates class dependent word N-grams by providing a conditional probability to each of the words that constitute "SS" and that are regarded by the syntactic tree division unit 212 as words. The syntactic tree class dependent word N-gram accumulation unit 232 accumulates the class dependent word N-grams generated by the syntactic tree class dependent word N-gram generation unit 231.

The class N-grams and class dependent word N-grams generated in the above manner make it possible to handle a long context including SS and a short context within SS at the same time, as in the case of the first embodiment. What is more, since the syntactic tree division unit 212 divides a short context within SS, it is not necessary to be equipped with the class corpus accumulation unit 121 that is required in the first embodiment.

Note that descriptions have been given by presenting an example in which a nesting structure is employed for a two-layered "standard word N-gram" shown in FIG. 16, but it is also possible to carry out the present embodiment in combination with another conventional N-gram variation.

For example, it is also possible to represent word N-grams that represent the inside of a title class by class N-grams being a classified group of words with similar properties and to represent them as a variable length unit that is a result of concatenating frequently appearing chains of words.

Furthermore, the present embodiment is not limited to a two-layered structure formed of the upper layer and the lower layer, and thus it is also possible to employ a structure with a larger number of layers as well as a recursive nesting structure. For example, "Kare ha eki made aruita to omotta to itta" may be divided as "Kare ha ""eki made aruita" to omotta" to itta".

Moreover, it is also possible to employ a single common language model, without a distinction between class N-grams and class dependent word N-grams.

(Third Embodiment)

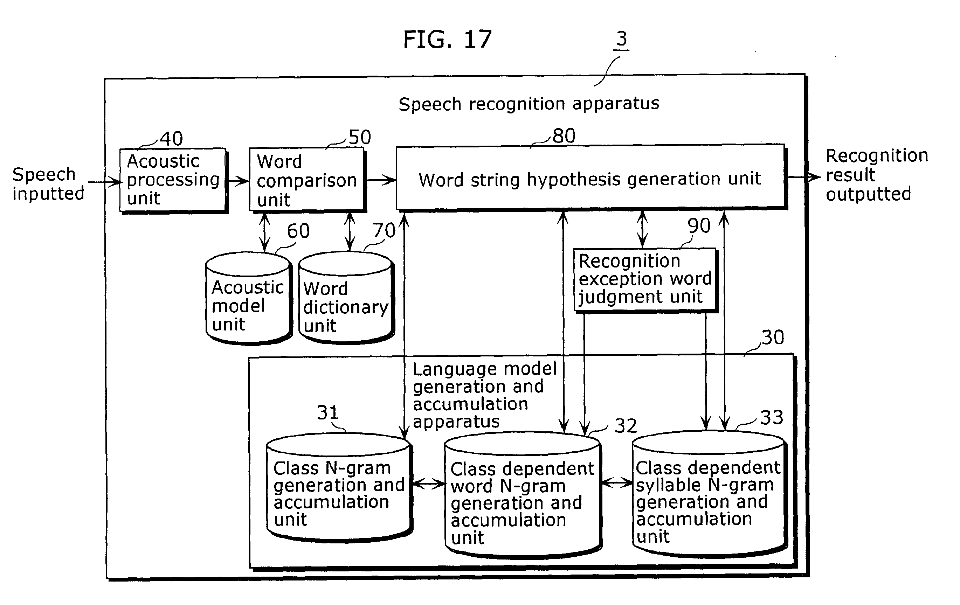

FIG. 17 is a block diagram showing a functional configuration of a speech recognition apparatus according to the third embodiment of the present invention. Note that recognition processing of the blocks that are assigned the same numbers as those in FIG. 2 is equivalent to the operation of the speech recognition apparatus 1 of the first embodiment, and therefore descriptions thereof are omitted.

As FIG. 17 shows, the speech recognition apparatus 3 is comprised of: a language model apparatus 30 and a recognition exception word judgment unit 90 that judges whether a word is a constituent word of a word string class or not, in addition to the acoustic processing unit 40, the word comparison unit 50, the acoustic model unit 60, the word dictionary unit 70, and the word string hypothesis generation unit 80.

The recognition exception word judgment unit 90 judges whether a calculation of language likelihood that is based on each occurrence probability in a word string class should be performed only based on class dependent word N-grams or it should be performed also with reference to class dependent syllable N-grams.

The language model apparatus 30 is comprised of: a class N-gram generation and accumulation unit 31 that generates class N-grams and accumulates the generated class N-grams; a class dependent word N-gram generation and accumulation unit 32 that generates class dependent word N-grams and accumulates the generated class dependent word N-grams; and a class dependent syllable N-gram generation and accumulation unit 33 that generates class dependent syllable N-grams and accumulates the generated class dependent syllable N-grams.

The speech recognition apparatus 3 according to the third embodiment is roughly divided into pre-processing for generating language models and recognition processing for sequentially recognizing an input utterance, as in the case of the speech recognition apparatus 1.

Next, a description is given of the pre-processing for generating language models.

Language models include class N-grams for evaluating a text that is a context including a word string class, class dependent word N-grams and class dependent syllable N-grams for performing processing on a string of words that constitute a word string class, and these models are generated before recognition processing.

First, a detailed description is given of the generation of class N-grams.

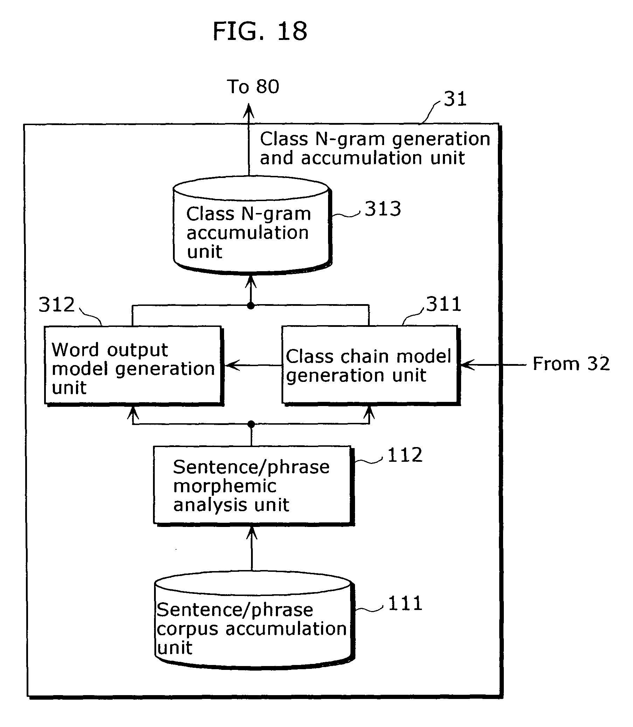

FIG. 18 is a block diagram showing a functional configuration of the class N-gram generation and accumulation unit 31. Note that in FIG. 18, blocks that are assigned the same numbers as those shown in FIG. 3 are the equivalents of those presented in the first embodiment.

As FIG. 18 shows, in addition to the sentence/phrase corpus accumulation unit 111 and the sentence/phrase morphemic analysis unit 112, the class N-gram generation and accumulation unit 31 is comprised of: a class chain model generation unit 311 that determines, from the result of morphemic analysis, the statistics concerning a chain of word string classes and classes which ordinary words belong to with reference to the definitions of word string classes that are obtained in advance by the class dependent word N-gram generation and accumulation unit 32; a word output model generation unit 312 that determines the probabilities at which the respective words are outputted from their word classes; and a class N-gram accumulation unit 313 that accumulates a model generated by the class chain model generation unit 311 and a model generated by the word output model generation unit 312 together as class N-grams.

The processing in the class N-gram generation and accumulation unit 31 is the same as the one presented in FIG. 3 in the first embodiment, i.e. it inputs a relatively long text such as sentence/phrase accumulated in the sentence/phrase corpus accumulation unit 111, like "Ashita no tenki yoho wo rokuga shite", to the sentence/phrase morphemic analysis unit 112, which analyzes the text into morphemes being the smallest language units having meanings, and the resultant of said analysis is outputted to the class chain model generation unit 311 and the word output model generation unit 312.

In the case where there exists a word string that belongs to a word string class accumulated in the class dependent word N-gram generation and accumulation unit 32 to be described below, the class chain model generation unit 311 converts it into a virtual symbol indicating word string class, whereas it converts the other ordinary words into symbols that indicate classes to which the respective words belong. A class chain model is generated by determining the statistics of chains of symbols in a symbol string that has been obtained in the above manner.

Moreover, the word output model generation unit 312 ( i ) determines the statistics of the number of occurrences of all the words in a string of words, which is a result of the morphemic analysis, excluding words that belong to word string classes as well as the statistics of the number of occurrences of classes to which the respective words belong, ( ii ) determines the probabilities at which the words occur in relation to classes, and ( iii ) generates them as a word output model..

These two models are stored into the class N-gram accumulation unit 313 to be referred to by the word string hypothesis generation unit 80 at the time of calculation of language likelihood shown in equation (13).

For example, the morphemic analysis of the sentence/phrase "Ashita no tenki yoho wo rokuga shite" gives "<SS> ashita no teki yoho wo rokuga shite <SE>". Assuming now that "tenki-yoho" is defined in the word string class <title>, the class chain model generation unit 311 substitutes the sentence/phrase that is divided on a morpheme basis as "<SS> ashita no <title> wo rokuga shite <SE>". Furthermore, ordinary words are also substituted with classes to be, for example, "<SS> <noun> <prepositional particle case> <title> < prepositional particle case> <"s" sound (sa, shi, su, se, so) conjugation verb> <verb> <SE>". The class chain model generation unit 311 generates a sequence such as above from the sentence/phrase corpus, and generates a class chain model, from which it is possible to determine the probability that class C2 follows class C1, for example.

For words excluding word string classes, the word output model generation unit 312 takes the statistics of the number of occurrences of classes as well as the number of occurrences of the corresponding words, based on the word sequence that is generated as a result of the morphemic analysis of the sentence/phrase corpus and the class sequence that has been substituted with class symbols. In the above example, for example, counting is performed in a way in which the number of occurrences of < prepositional particle case> is two, and a specific number of occurrences of the words that belong to this class is one regarding "no" and one regarding "wo". From this result, a word output model is generated from which it is possible to determine the probability that word W occurs in class C, for example.

Note that in the above example, although classes to which ordinary words belong are classes that are based on grammatical knowledge, it is also possible to use classes that are automatically categorized on the basis of statistics. Furthermore, in the example of class chain model, although an example of the probability model is presented in which one preceding word serves as a condition, it is also possible to use a probability model in which two, three preceding words serve as a condition.

Next, a description is given of the generation of class dependent word N-grams.

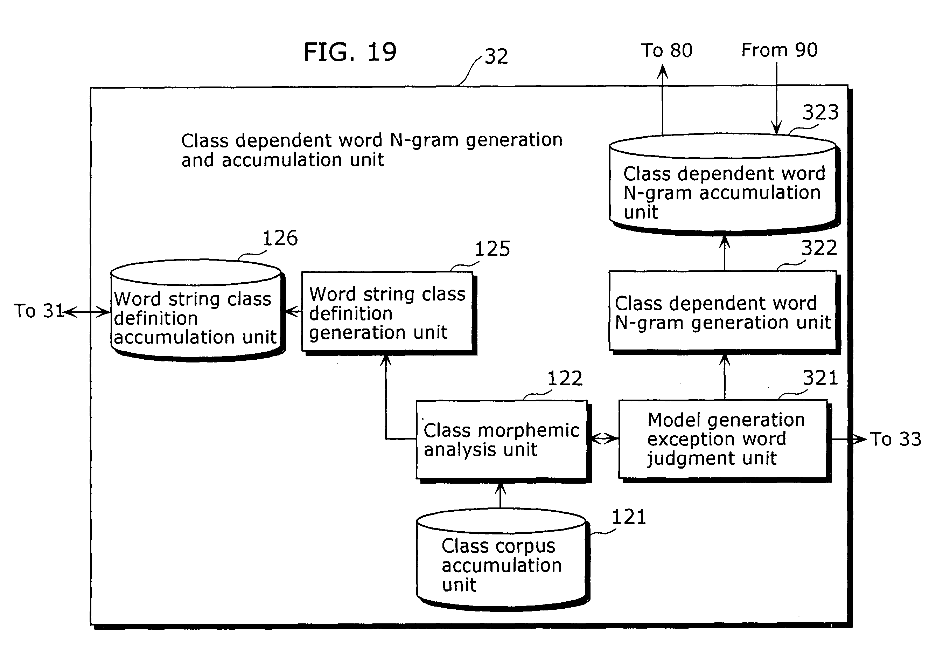

FIG. 19 is a block diagram showing an internal functional configuration of the class dependent word N-gram generation and accumulation unit 32. Note that blocks that are assigned the same numbers as those of FIG. 6 are the same as those presented in FIG. 6 in the first embodiment, and therefore descriptions thereof are omitted.

As FIG. 19 shows, in addition to the class corpus accumulation unit 121, the class morphemic analysis unit 122, the word string class definition generation unit 125 and the word string class definition accumulation unit 126, the class dependent word N-gram generation and accumulation unit 32 is comprised of a model generation exception word judgment unit 321 that judges a word in a word string class as an exception word at the time of model generation, and a class dependent word N-gram generation unit 322 that generates class dependent word N-grams.

Processing is performed in the class dependent word N-gram generation and accumulation unit 32 as in the case of the first embodiment. First, in the class morphemic analysis unit 122, morphemic analysis is performed on a word string accumulated in the class corpus accumulation unit 121, which is divided into words. Then, in the word string class definition generation unit 125, the definitions of word string classes are generated based on such divided words and are stored into the word string class definition accumulation unit 126. At the same time, in the model generation exception word judgment unit 321, it is judged whether to treat the words, which have been analyzed into morphemes, as words per se or as exception words. When the model generation exception word judgment unit 321 judges that a word is an exception word, such exception word is substituted and the exception word is divided into syllables that are basic phonetic units constituting the pronunciation of said word.

Take the word string "shiretoko-no-shinpi", for example. In the case where an exception condition in the model generation exception word judgment unit 321 is <place name>, the word string is substituted as "<place name>-no-shinpi", and a substitution is performed into a string of syllables "<MS>-shi-re-to-ko-<ME>". Note that <MS> and <ME> are virtual symbols that denote the beginning and end of the syllable string of the exception word.

Note that "syllable" (Here, it refers to English syllable. In Japanese, a similar acoustic unit is "mora"), which is a phoneme that is considered as one sound (one beat) in the English language, corresponds approximately to each of *hiragana* characters when a Japanese word is written in *hiragana*. Furthermore, syllable corresponds to one sound in *haiku* when syllables are counted in a 5-7-5 pattern. Note, however, that as for palatalized consonant (sound that is followed by small "ya", "yu" and "yo"), double consonant (small "tu"/ choked sound), and syllabic nasal /N/, whether they are treated as an independent syllable nor not depends on whether they are pronounced as one sound (one beat) or not. For example, "Tokyo" consists of four syllables "to", "u", "kyo", and "u", "Sapporo" consists of four syllables "sa", "p", "po", and "ro", and "Gunma" consists of three syllables "gu", "n", and "ma".

The class dependent word N-gram generation unit 322 obtains, from a large number of data in the class corpus, a word sequence in which an exception word portion is substituted with another virtual symbol, based on which the class dependent word N-gram generation unit 322 converts the frequency of each chain of words in a word string class into a probability model, and generates class dependent word N-grams. These class dependent word N-grams are stored into the class dependent word N-gram accumulation unit 124 and referred to by the word string hypothesis generation unit 80 at the time of calculation of occurrence probabilities in a word string class. Note that in the present embodiment, class dependent word N-grams are described as being intended for modeling the chain probabilities of words inside a word string class. However, as described for the generation of class N-gram model, it is also possible to substitute words with the classes to which they belong, and then to model class dependent word N-grams based on two types of probabilities, the chain probabilities of classes and the probabilities of word output in relation to classes.

Next, a description is given of the generation of class dependent syllable N-grams.

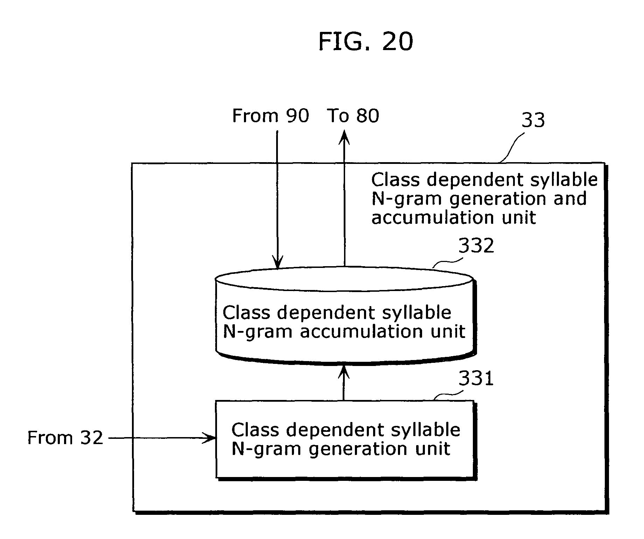

FIG. 20 is a block diagram showing an internal functional configuration of the class dependent syllable N-gram generation and accumulation unit 33.

As FIG. 20 shows, the class dependent syllable N-gram generation and accumulation unit 33 is comprised of: a class dependent syllable N-gram generation unit 331 that models, based on a sequence of syllables that are the basic phonetic units constituting the pronunciation of an exception word outputted from the model generation exception word judgment unit 321 of the class dependent word N-gram generation and accumulation unit 32, chains of syllables in the exception word from such string of syllables; and a class dependent syllable N-gram accumulation unit 332 that accumulates the generated class dependent syllable N-grams.

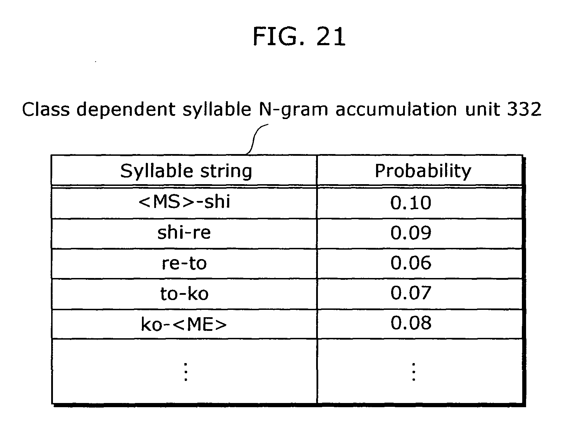

In the class dependent syllable N-gram generation and accumulation unit 33, first, when a sequence of syllables (e.g. "<MS>-shi-re-to-ko-<ME>"), which are basic phonetic units constituting the pronunciation of a word that has been judged to be an exception word by the model generation exception word judgment unit 321 of the class dependent word N-gram generation and accumulation unit 32, is inputted to the class dependent syllable N-gram generation unit 331, a large number of exception words in the corpus that have been substituted with syllable sequences are inputted to the class dependent syllable N-gram generation unit 331, which then determines the statistics of each chain of syllables, and generates a model that indicates the probability of each chain of syllables. More specifically, in the case of word bigram model, the class dependent syllable N-gram generation unit 331 determines the frequency of each of the syllables <MS>-shi, shi-re, re-to, to-ko, ko-<ME>, ..., and determines the probability P (M2 | M1) of each of them by calculating (frequency of a chain of M1 and M2)/(frequency of M1). Here, M1 and M2 denote the respective syllables. Then, as shown in FIG. 21, the class dependent syllable N-gram generation unit 331 accumulates the chains of syllables and their probabilities in association with each other in the class dependent syllable N-gram accumulation unit 332.

The generated class dependent syllable N-grams are accumulated in the class dependent syllable N-gram accumulation unit 332, and are referred to by the word string hypothesis generation unit 80 for calculation of the occurrence probabilities of a word string class.

Note that in the third embodiment, the class corpus accumulation unit 121 that is the same as the one in the first embodiment is used for the generation of class dependent word N-grams and class dependent syllable N-grams, but it is also possible to use mutually different corpuses for generating these models so as to generate models.

As the operation of recognition processing, as in the case of the speech recognition apparatus 1, the word comparison unit 50 performs word comparison on an input utterance so as to generate word hypotheses, and the word string hypothesis generation unit 80 concatenates word candidates in consideration of word segments, performs additions of language likelihoods based on the word sequence, and calculates scores of word string candidates. Here, for a word string belonging to a specific word string class, the recognition exception word judgment unit 90 judges whether it is an exception word or not, and language likelihood is calculated with reference to class dependent word N-grams accumulated in the class dependent word N-gram generation and accumulation unit 32 or class dependent syllable N-grams accumulated in the class dependent syllable N-gram generation and accumulation unit 33.

Here, a description is given of a method for calculating language likelihood according to the third embodiment.

Suppose that C1, C2, ..., Cu, ..., Cm are classes to which the respective words in an arbitrary word string W1, W2, ..., Wi, ..., Wn including a word string class belong. Note here that class C may also denote a word string class. Suppose that the word string W1 Wn includes a sequence that corresponds to a word string class, and that such sequence corresponds to a substring Wj, ..., Wk. In this case, the language likelihood of the word string W1 Wn is calculated by the following equation (13):

$$\log P(W_i \cdots Wn)$$

$$= \begin{cases} \sum_{i=1}^{L} \log P(C_u \mid C_{u-1}) \cdot P(W_i \mid C_u) \\ \qquad \text{(when } C_u \text{ is other than word string class)} \\ \sum_{i=1}^{L} \log P(C_u \mid C_{u-1}) \cdot Pc(W_j \cdots W_k \mid C_u) \\ \qquad \text{(when } C_u \text{ is word string class)} \end{cases}$$

$$\cdots(13)$$

Here, P(Cu |Cu-1) and P(Wi | Cu) are probabilities that are calculated based on class N-grams. Pc() is the probability at which the word string class occurs, which is calculated by the following equation (14):

$$\log P_c(W_j \cdots W_k \mid C_u)$$

$$= \begin{cases} \sum_{i=1}^{L} \log P(W_i \mid W_{i-1}, C_u) & \text{(when } W_i \text{ is not exception word)} \\ \sum_{i=1}^{L} \log P_m(M_a \cdots M_b \mid \text{<exeption word>}, C_u) \cdot P(\text{<exception word} > \mid W_{i-1}, C_u) & \text{(when } W_i \text{ is exception word)} \end{cases}$$

$$\cdots (14)$$

Here, P(Wi |Wi-1, Cu) and P(<exception word>| Wi-1, Cu) are probabilities that are calculated based on class dependent word N-grams.

Moreover, Ma...Mb denotes a string of syllables corresponding to the reading of Wi, whereas Pm() is the probability that is calculated based on class dependent syllable N-grams.

The recognition exception word judgment unit 90 judges whether to perform the above probability equation (14) in the first form or the second form. This judgment is made based on information such as the linguistic attributes of the word string class Cu and the word Wi. Here, linguistic attribute referrers to whether Wi is a proper noun being a place name or not, for example. As described above, words that have been judged to be exception words as a result of exception word judgment, are divided into units such as syllables that are shorter than words so as to represent word string classes. Accordingly, there is no need for all words to be registered in the dictionary or no need for class dependent word N-grams to take into consideration a chain of every single word. This makes it possible to achieve a compact model that is capable of high performance.

Next, an example of the above method for calculating language likelihood is presented by providing a concrete example.

For example, in the case of "Taiyo wo ute wo miru" that is an example including the title class as a word string class, language likelihood is calculated by the following equation (15):

$$\begin{aligned} &\log P(\text{<SS>}, taiyo, wo, ute, wo, miru, \text{<SE>}) \\ &= \log P(\text{<title class>} \mid \text{<SS>}) \cdot \\ &\quad P_c(\text{<CS>}, taiyo, wo, ute, \text{<CE>} \mid \text{<title class>}) \\ &+ \log P(\text{<prepositional particle case>} \mid \text{<title class>}) \cdot P(wo \mid \\ &\quad \text{<prepositional particle case>}) \\ &+ \log P(\text{<verb>} \mid \text{<prepositional particle case>}) \cdot P(miru \mid \text{<verb>}) \\ &+ \log P(\text{<SE>} \mid \text{<verb>}) \cdot P(\text{<SE>} \mid \text{<SE>}) \end{aligned}$$

$$\cdots (15)$$

Here, <SS> and <SE> are virtual symbols that represent the beginning of a sentence and the end of a sentence. Moreover, <CS> and <CE> are virtual symbols that represent the beginning and end of a word string class. Here, the language likelihood that is based on the occurrence probabilities in the title class "taiyo-wo-ute" is calculated by the following equation (16):

$$logP_c(<CS>, taiyo, wo, ute, <CE>|<title\ class>)$$
$$=logP(taiyo|<CS>, <title\ class>)$$
$$+logP(wo|taiyo, <title\ class>)$$
$$+logP(ute|wo, <title\ class>)$$
$$+logP(<CE>|ute, <title\ class>)$$

$$\cdots(16)$$

The above example is given on the assumption that no exception word is included in the title class that is a word string class, and therefore no reference is made to class dependent syllable N-grams.

Next, as an example in which a word string class includes an exception word, a method for calculating the language likelihood of "shiretoko no shinpi wo miru" is presented by the following equation (17):

$$logP(<SS>shiretoko, no, shinpi, wo, miru, <SE>)$$
$$=logP(<title\ class>|<SS>) \cdot$$
$$\quad P_c(<CS>, shiretoko, no, shinpi, <CE>|<title\ class>)$$
$$+logP(<prepositional\ particle\ case>|<title\ class>) \cdot P(wo|$$
$$\quad <prepositional\ particle\ case>)$$
$$+logP(<verb>|<prepositional\ particle\ case>) \cdot P(miru|<verb>)$$
$$+logP(<SE>|<verb>) \cdot P(<SE>|<SE>)$$

$$\cdots(17)$$

Here, supposing that a proper noun that indicates a place name is an exception word in the title class, the language likelihood based on the occurrence probabilities in "shiretoko-no-shinpi" is calculated by the following equation (18):

$$logP_c(<CS>, shiretoko, no, shinpi, <CE>|<title\ class>)$$
$$=logP_m(<MS>shi, re, to, ko, <ME>|<place\ name>,$$
$$\quad <title\ class>) \cdot P(<place\ name>|<CS>, <title\ class>)$$
$$+logP(no|<place\ name>, <title\ class>)$$
$$+logP(shinpi|no, <title\ class>)$$
$$+logP(<CE>|shinpi, <title\ class>)$$

$$\cdots(18)$$

Here, <MS> and <ME> denote virtual symbols that represent the beginning and end of a string of syllables in an exception word. Furthermore, as for the occurrence probability Pm() of an exception word, the language likelihood is calculated by the following equation (19), based on class dependent syllable N-grams:

$$logP_m(<MS>\ shi,\ re,\ to,\ ko,\ <ME>|\ <place\ name>,\ <title\ class>)$$
$$=logP(shi|\ <MS>,\ <place\ name>,\ <title\ class>)$$
$$+logP(re|\ shi,\ <place\ name>,\ <title\ class>)$$
$$+logP(to|\ re,\ <place\ name>,\ <title\ class>)$$
$$+logP(ko|\ to,\ <place\ name>,\ <title\ class>)$$
$$+logP(<MS>|\ ko,\ <place\ name>,\ <title\ class>)$$

$$\cdots(19)$$

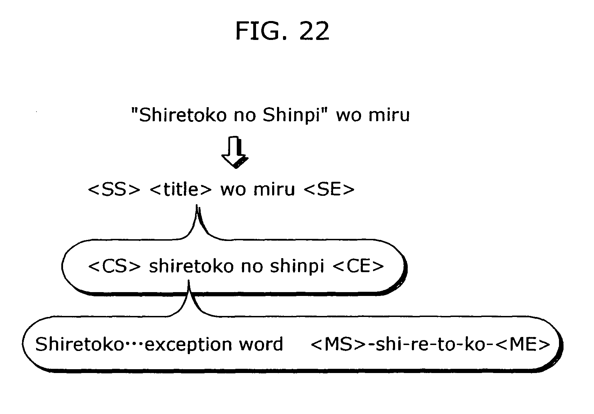

In other words, in the case of "shiretoko no shinpi wo miru", as shown in FIG. 22, the likelihood of the word string "<SS> <title> wo miru <SE>" is determined. Then, as for <title>, the likelihood of a string of words, the exception word, -no-shinpi, is determined. Furthermore, as for the exception word, the likelihood of a string of syllables <MS>-shi-re-to-ko-<ME> is determined. By calculating language likelihood in the above manner, it becomes possible to recognize a place name included in a title without needing to construct class dependent word N-grams based on all place names that could be included in the title class.

Note that in the third embodiment, an example is presented in which the probability that a word (syllable) follows the previous word (syllable) in all the cases of class N-grams, class dependent word N-grams, and class dependent syllable N-grams, but it is also possible to employ a probability model that takes into account a longer history (e.g. two previous words and three previous words). Furthermore, although an example is presented in which word (syllable) is used as a language unit of the above language models, it is also possible to employ a model in which concatenated words (concatenated syllables) are also used as a language model.

Furthermore, the title class is presented here as an exemplary word class, but it is also possible to use an organization name class such as "Administrative Management Bureau, Ministry of Public Management, Home Affairs, Posts and Telecommunications" and a facility name class such as "Ebina Service Area, Tomei Highway".

Moreover, in the above example, a place name such as "Shiretoko" is presented as an exception word in a word string class, but it is also effective to further include the following words as exception words: personal names such as "Ichiroh"; buzzwords and new words such as "Shio-jii"; other words that are not registered in the recognition dictionary for the reason that there a large number of types; and words that have been judged, from statistical point of view, to be highly effective to be modeled as exception words.

Finally, a description is given of the recognition exception word judgment unit 90.

The recognition exception word judgment unit 90 is intended for judging whether to perform calculation based only on class dependent word N-grams or to perform calculation also with reference to class dependent syllable N-grams in calculating the language likelihood based on the occurrence probabilities in a word string class. Judgment rules used by the recognition exception word judgment unit 90 shall be determined in advance as in the case of generating each type of language models. An exemplary judgment rule is a rule such as whether it is a place name word or not in a word string class, as presented in an example of the present embodiment. As examples of judgment rules, it is also effective to further include the following words as exception words as described above: personal names such as "Ichiroh"; buzzwords and new words such as "Shio-jii"; other words that are no registered in the recognition dictionary because of the reason that there a large number of types; and words that have been judged to be highly effective to be modeled as exception words from the viewpoint of statistics. Furthermore, it is preferable that the model generation exception word judgment unit 321 included in the class dependent word N-gram generation and accumulation unit 32 is the same as the recognition exception word judgment unit 90 or a block that accumulates the same rules as it. However, it is also possible to use a usage method in which different judgment rules are intentionally used concerning exception words at the time of constructing and recognizing language models.

Note that in the present embodiment, an example is presented in which a result of performing morphemic analysis of a text corpus is used at the time of constructing class N-gram language model, class dependent word N-gram language model, and class dependent syllable N-grams, but it is also effective to construct each language model in the following manner as presented in the second embodiment: perform morphemic analysis of a text corpus; then determine, from a result of syntactic analysis, a syntactic tree for constructing class N-grams and a syntactic tree for constructing class dependent word N-grams; establish rules for judging exception words in consideration of syntactic conditions; and extract data for constructing class dependent syllable N-grams, based on such rules. In this case, each of the language models are constructed in the following manner: the upper-layer syntactic tree of the syntactic tree is inputted to the syntactic tree class N-gram generation and accumulation unit; a syntactic tree is inputted to the syntactic tree class dependent word N-gram generation and construction unit, said syntactic tree being obtained by substituting a word, which is included in the lower-layer syntactic tree and judged to be an exception word by the exception word judgment unit, with a virtual symbol related to a reason for such judgment; and words excluded by the exception word judgment unit are sorted for each reason of their judgments and inputted to the syntactic tree class dependent syllable N-gram generation and accumulation unit.

(Fourth Embodiment)

Next, a description is given of the fourth embodiment of the present invention. A speech recognition apparatus according to the fourth embodiment is exactly the same as the first embodiment in that it generates word hypotheses and outputs recognition results by use of class N-grams accumulated in the class N-gram generation and accumulation unit and class dependent word N-grams accumulated in the class dependent word N-gram generation and accumulation unit, these units being presented in the first embodiment (FIG. 2). Its difference from the first embodiment lies in that the class dependent word N-gram generation and accumulation unit is capable of responding to dynamic changes in the class corpus.

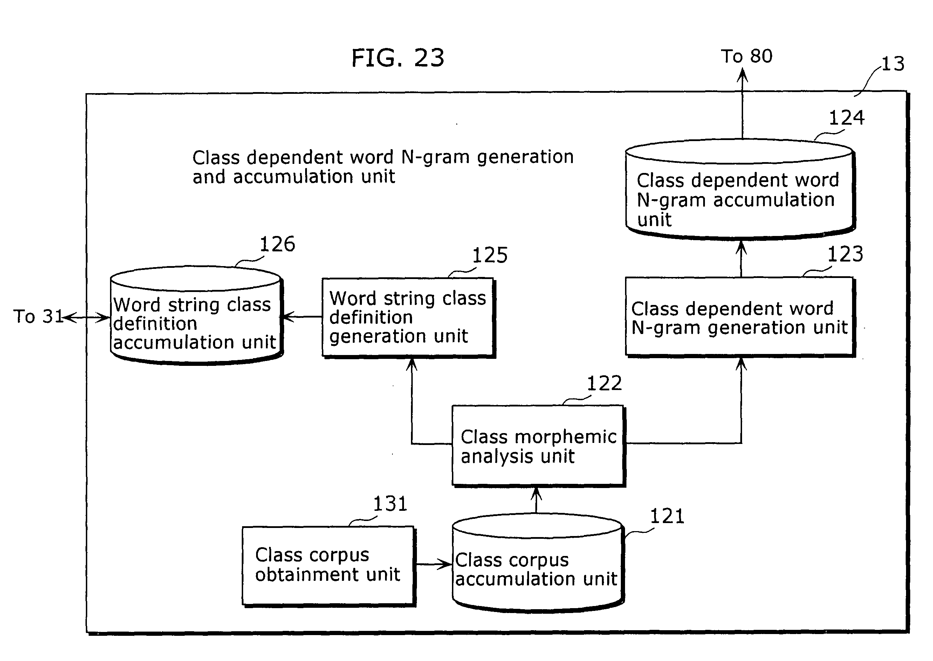

FIG. 23 shows a configuration of the class dependent word N-gram generation and accumulation unit according to the fourth embodiment. Blocks that are assigned the same numbers as those in FIG. 6 shall perform the same processing as processing presented in the first embodiment.

As FIG. 23 shows, the class dependent word N-gram generation and accumulation unit 13 is further equipped with a class corpus obtainment unit 131 that obtains a corpus necessary for constructing class dependent word N-grams through a communication means such as telephone line and the Internet.

Next, a description is given of how class dependent word N-grams are constructed in the fourth embodiment.

The class corpus obtainment unit 131 of the class dependent word N-gram generation and accumulation unit obtains a class corpus according to a trigger signal such as a trigger that is generated based on predetermined time intervals and a trigger based on a user operation. Class dependent word N-grams are generated by the class morphemic analysis unit 122 and the class dependent word N-gram generation unit 123 from the obtained class corpus, as in the case of the one presented in the first embodiment.

As described above, the effect to be achieved by making it possible to dynamically update class dependent N-grams is noticeable in the case where the speech recognition apparatus according to the present embodiment is used, for example, for a television program guidance system. Suppose, for example, that a class N-gram model has modeled a phrase "ashita no <television program> wo rokuga shite" for a sentence "ashtia no Taiyo wo Ute wo rokuga shite" as a user's utterance to a television program guidance system and that a class dependent word N-gram model has modeled "taiyo-wo-ute" as a television name class. In this case, while the phrase pattern itself of the phrase changes little over time, the program name changes greatly since programs to be broadcast change on a daily basis. Therefore, by obtaining a program name corpus again according to need and reconstructing class dependent word N-grams for a program name, a model for recognizing program names can be optimized to the latest one. Meanwhile, since class N-grams for phrase patterns do not change much over time, it is not necessary to update them and thus what is required is simply to accumulate class N-grams that have been constructed in advance off-line. Accordingly, it becomes possible to reduce the number of calculation resources and hardware resources.

Furthermore, in the fourth embodiment, although an application to a television program guidance system is presented as an example to present the effect, but other applications are also effective such as to a Website guidance system, a library guidance system, and a car navigation system.

Furthermore, in the present embodiment, an example is presented in which only a class dependent word N-gram language model, a lower-level N-gram model, is updated, but it is also possible to employ a method in which only a higher-level N-gram language model is updated or both higher and lower-level N-gram language models are updated at timings that are appropriate for the respective models.

Furthermore, in the present embodiment, an example is presented in which a class N-gram language model and a class dependent word N-gram language model are constructed on-line by use of corpuses for construction of the respective models, but it is also possible to employ a method in which respective language models that have been constructed off-line are obtained separately at optimum timings for use.

**Industrial Applicability**

The present invention is capable of being used in a various types of electronic equipment utilizing a speech recognition technology as an input means for an apparatus including AV system such as television and video, car-mounted equipment such as car navigation system, and portable information terminal such as PDA and mobile telephone. Therefore, the present invention provides a high and wide industrial applicability.

**Claims**

1. A language model generation and accumulation apparatus that generates and accumulates language models for speech recognition, the apparatus comprising:

   a higher-level N-gram language model generation and accumulation unit operable to generate and accumulate a higher-level N-gram language model that is obtained by modeling each of a plurality of texts as a sequence of words that includes a word string class having a specific linguistic property; and
   a lower-level N-gram language model generation and accumulation unit operable to generate and accumulate a lower-level N-gram language model that is obtained by modeling a sequence of words within the word string class.

2. The language model generation and accumulation apparatus according to Claim 1,
   wherein the higher-level N-gram language model generation and accumulation unit and the lower-level N-gram language model generation and accumulation unit generate the respective language models, using different corpuses.

3. The language model generation and accumulation apparatus according to Claim 2,
   wherein the lower-level N-gram language model generation and accumulation unit includes
   a corpus update unit operable to update the corpus for the lower-level N-gram language model, and
   the lower-level N-gram language model generation and accumulation unit updates the lower-level N-gram language model based on the updated corpus, and generates the updated lower-level N-gram language model.

4. The language model generation and accumulation apparatus according to Claim 1,
   wherein the lower-level N-gram language model generation and accumulation unit analyzes the sequence of words within the word string class into one or more morphemes that are smallest language units having meanings, and generates the lower-level N-gram language model by modeling each sequence of said one or more morphemes in dependency on said word string class.

5. The language model generation and accumulation apparatus according to Claim 1,
   wherein the higher-level N-gram language model generation and accumulation unit substitutes the word string class with a virtual word, and then generates the higher-level N-gram language model by modeling a sequence made up of said virtual word and the other words, said word string class being included in each of the plurality of texts analyzed into morphemes.

6. The language model generation and accumulation apparatus according to Claim 1,
   wherein the lower-level N-gram language model generation and accumulation unit includes
   an exception word judgment unit operable to judge whether or not a specific word out of the words that appear in the word string class should be treated as an exception word, based on a linguistic property of said specific word, and divides the exception word into ( i ) a syllable that is a basic phonetic unit constituting a pronunciation of said word and ( ii ) a unit that is obtained by combining syllables based on a result of said judgment, said exception word being a word not being included as a constituent word of the word string class, and
   the language model generation and accumulation apparatus further comprises
   a class dependent syllable N-gram generation and accumulation unit operable to generate class dependent syllable N-grams by modeling a sequence made up of the syllable and the unit obtained by combining syllables and by providing a language likelihood to said sequence in dependency on either the word string class or the linguistic property of the exception word, and accumulate said generated class dependent syllable N-grams, said language likelihood being a logarithm value of a probability.

7. The language model generation and accumulation apparatus according to Claim 1, further comprising
   a syntactic tree generation unit operable to perform morphemic analysis as well as syntactic analysis of a text, and generate a syntactic tree in which said text is structured by a plurality of layers, focusing on a node that is on said syntactic tree and that has been selected on the basis of a predetermined criterion,
   wherein the higher-level N-gram language model generation and accumulation unit generates the higher-level N-gram language model for syntactic tree, using a first subtree that constitutes an upper layer from the focused node, and
   the lower-level N-gram language model generation and accumulation unit generates the lower-level N-gram language model for syntactic tree, using a second subtree that constitutes a lower layer from the focused node.

8. The language model generation and accumulation apparatus according to Claim 7,
   wherein the lower-level N-gram language model generation and accumulation unit includes
   a language model generation exception word judgment unit operable to judge a specific word appearing in the second subtree as an exception word based on a predetermined linguistic property, said exception word being a word not being included as a constituent word of any subtrees, and
   the lower-level N-gram language model generation and accumulation unit generates the lower-level N-gram language model by dividing the exception word into ( i ) a syllable that is a basic phonetic unit constituting a pronunciation of said word and ( ii ) a unit that is obtained by combining syllables, and then by modeling a sequence made up of the syllable and the unit obtained by combining syllables in dependency on a location of the exception word in the syntactic tree and on the linguistic property of said exception word.

9. The language model generation and accumulation apparatus according to Claim 1, further comprising
   a syntactic tree generation unit operable to perform morphemic analysis as well as syntactic analysis of a text, and generate a syntactic tree in which said text is structured by a plurality of layers, focusing on a node that is on said syntactic tree and that has been selected on the basis of a predetermined criterion,
   wherein the higher-level N-gram language model generation and accumulation unit generates the higher-level N-gram language model, using a first subtree that constitutes a highest layer of the syntactic tree, and
   the lower-level N-gram language model generation and accumulation unit categorizes each subtree constituting a layer lower than a second layer based on a positioning of said each subtree when included in the upper layer, and generates the lower-level N-gram language model by use of each of the categorized subtree.

10. The language model generation and accumulation apparatus according to Claim 9,
    wherein the lower-level N-gram language model generation and accumulation unit includes
    a language model generation exception word judgment unit operable to judge, as an exception word, a specific word appearing in any subtrees in a layer lower than the second layer based on a predetermined linguistic property, said exception word being a word not being included as a constituent word of any subtrees, and
    the lower-level N-gram language model generation and accumulation unit divides the exception word into ( i ) a syllable that is a basic phonetic unit constituting a pronunciation of said word and ( ii ) a unit that is obtained by combining syllables, and generates the lower-level N-gram language model by modeling a sequence made up of the syllable and the unit obtained by combining syllables in dependency on a position of the exception word in the syntactic tree and on the linguistic property of said exception word.

11. The language model generation and accumulation apparatus according to Claim 1,
    wherein the higher-level N-gram language model generation and accumulation unit generates the higher-level N-gram language model in which each sequence of N words including the word string class is associated with a probability at which said each sequence of words occurs.

12. The language model generation and accumulation apparatus according to Claim 1,
    wherein the lower-level N-gram language model generation and accumulation unit generates the lower-level N-gram language model by associating each N-long chain of words constituting the word string class with a probability at which said each chain of words occurs.

13. A speech recognition apparatus that recognizes a speech which is a sequence of uttered words, using the following:

    a higher-level N-gram language model that is obtained by modeling each of a plurality of texts as a sequence of words that includes a word string class having a specific linguistic property; and
    a lower-level N-gram language model that is obtained by modeling a sequence of words within the word string class.

14. A speech recognition apparatus that recognizes a sequence of uttered words, comprising
    a language model generation and accumulation apparatus that generates and accumulates language models for speech recognition,
    wherein the language model generation and accumulation apparatus includes:

    a higher-level N-gram language model generation and accumulation unit operable to generate and accumulate a higher-level N-gram language model that is obtained by modeling each of a plurality of texts as a sequence of words that includes a word string class having a specific linguistic property; and
    a lower-level N-gram language model generation and accumulation unit operable to generate and accumulate a lower-level N-gram language model that is obtained by modeling a sequence of words within the word string class, and

the speech recognition apparatus recognizes the speech by use of the higher-level N-gram language model that is accumulated by the higher-level N-gram language model generation and accumulation unit and the lower-level N-gram language model that is accumulated by the lower-level N-gram language model generation and accumulation unit.

**15.** The speech recognition apparatus according to Claim 14,

wherein the higher-level N-gram language model generation and accumulation unit and the lower-level N-gram language model generation and accumulation unit generate the respective language models, using different corpuses, and

the speech recognition apparatus recognizes the speech by use of the higher-level N-gram language model and the lower-level N-gram language model that have been respectively built using the different corpuses.

**16.** The speech recognition apparatus according to Claim 15,

wherein the lower-level N-gram language model generation and accumulation unit includes

a corpus update unit operable to update the corpus for the lower-level N-gram language model,

the lower-level N-gram language model generation and accumulation unit updates the lower-level N-gram language model based on the updated corpus, and generates the updated lower-level N-gram language model, and

the speech recognition apparatus recognizes the speech by use of the updated lower-level N-gram language model.

**17.** The speech recognition apparatus according to Claim 14,

wherein the lower-level N-gram language model generation and accumulation unit analyzes the sequence of words within the word string class into one or more morphemes that are smallest language units having meanings, and generates the lower-level N-gram language model by modeling each sequence of said one or more morphemes in dependency on said word string class, and

the speech recognition apparatus recognizes the speech by use of the lower-level N-gram language model that has been modeled as the sequence of said one or more morphemes.

**18.** The speech recognition apparatus according to Claim 14,

wherein the higher-level N-gram language model generation and accumulation unit substitutes the word string class with a virtual word, and then generates the higher-level N-gram language model by modeling a sequence made up of said virtual word and the other words, said word string class being included in each of the plurality of texts analyzed into morphemes, and

the speech recognition apparatus recognizes the speech by use of the higher-level N-gram language model that has been modeled as the sequence made up of the virtual word and the other words.

**19.** The speech recognition apparatus according to Claim 18,

wherein the lower-level N-gram language model generation and accumulation unit includes

an exception word judgment unit operable to judge whether or not a specific word out of the words that appear in the word string class should be treated as an exception word, based on a linguistic property of said specific word, and divides the exception word into ( i ) a syllable that is a basic phonetic unit constituting a pronunciation of said word and ( ii ) a unit that is obtained by combining syllables based on a result of said judgment, said exception word being a word not being included as a constituent word of the word string class,

the language model generation and accumulation apparatus further comprises

a class dependent syllable N-gram generation and accumulation unit operable to generate class dependent syllable N-grams by modeling a sequence made up of the syllable and the unit obtained by combining syllables and by providing a language likelihood to said sequence in dependency on either the word string class or the linguistic property of the exception word, and accumulate said generated class dependent syllable N-grams, said language likelihood being a logarithm value of a probability, and

the speech recognition apparatus recognizes the speech by use of the class dependent syllable N-grams.

**20.** The speech recognition apparatus according to Claim 19,

wherein the language model generation and accumulation apparatus further comprises

a syntactic tree generation unit operable to perform morphemic analysis as well as syntactic analysis of a text, and generate a syntactic tree in which said text is structured by a plurality of layers, focusing on a node that is on said syntactic tree and that has been selected on the basis of a predetermined criterion,

wherein the higher-level N-gram language model generation and accumulation unit generates the higher-level N-gram language model for syntactic tree, using a first subtree that constitutes an upper layer from the focused node, and

the lower-level N-gram language model generation and accumulation unit generates the lower-level N-gram language model for syntactic tree, using a second subtree that constitutes a lower layer from the focused node, and

the speech recognition apparatus comprises:

an acoustic processing unit operable to generate feature parameters from the speech;

a word comparison unit operable to compare a pronunciation of each word with each of the feature parameters, and generate a set of word hypotheses including an utterance segment of said each word and an acoustic likelihood of said each word; and

a word string hypothesis generation unit operable to generate a word string hypothesis from the set of word hypotheses with reference to the higher-level N-gram language model for syntactic tree and the lower-level N-gram language model for syntactic tree, and generate a result of the speech recognition.

21. The speech recognition apparatus according to Claim 20,

wherein the lower-level N-gram language model generation and accumulation unit includes

a language model generation exception word judgment unit operable to judge a specific word appearing in the second subtree as an exception word based on a predetermined linguistic property, said exception word being a word not being included as a constituent word of any subtrees,

the lower-level N-gram language model generation and accumulation unit generates the lower-level N-gram language model by dividing the exception word into ( i ) a syllable that is a basic phonetic unit constituting a pronunciation of said word and ( ii ) a unit that is obtained by combining syllables, and then by modeling a sequence made up of the syllable and the unit obtained by combining syllables in dependency on a location of the exception word in the syntactic tree and on the linguistic property of said exception word, and

the word string hypothesis generation unit generates the result of the speech recognition.

22. The speech recognition apparatus according to Claim 14,

wherein the language model generation and accumulation apparatus further comprises

a syntactic tree generation unit operable to perform morphemic analysis as well as syntactic analysis of a text, and generate a syntactic tree in which said text is structured by a plurality of layers, focusing on a node that is on said syntactic tree and that has been selected on the basis of a predetermined criterion,

wherein the higher-level N-gram language model generation and accumulation unit generates the higher-level N-gram language model, using a first subtree that constitutes a highest layer of the syntactic tree,

the lower-level N-gram language model generation and accumulation unit categorizes each subtree constituting a layer lower than a second layer based on a positioning of said each subtree when included in the upper layer and generates the lower-level N-gram language model by use of each of the categorized subtree, and

the speech recognition apparatus recognizes the speech by use of the higher-level N-gram language model that has been generated using the first subtree and the lower-level N-gram language model that has been generated using said each subtree constituting a layer lower than the second layer.

23. The speech recognition apparatus according to Claim 22,

wherein the lower-level N-gram language model generation and accumulation unit includes

a language model generation exception word judgment unit operable to judge, as an exception word, a specific word appearing in any subtrees in a layer lower than the second layer based on a predetermined linguistic property, said exception word being a word not being included as a constituent word of any subtrees,

the lower-level N-gram language model generation and accumulation unit divides the exception word into ( i ) a syllable that is a basic phonetic unit constituting a pronunciation of said word and ( ii ) a unit that is obtained by combining syllables, and generates the lower-level N-gram language model by modeling a sequence made up of the syllable and the unit obtained by combining syllables in dependency on a position of the exception word in the syntactic tree and on the linguistic property of said exception word, and

the speech recognition apparatus recognizes the speech by use of the higher-level N-gram language model that does not include the exception word and the lower-level N-gram language model that includes the exception word.

24. The speech recognition apparatus according to Claim 14,

wherein the higher-level N-gram language model generation and accumulation unit generates the higher-level N-gram language model in which each sequence of N words including the word string class is associated with a probability at which said each sequence of words occurs, and

the speech recognition apparatus comprises

a word string hypothesis generation unit operable to evaluate a word string hypothesis by multiplying each probability at which said each sequence of N words including the word string class occurs.

25. The speech recognition apparatus according to Claim 14,

wherein the lower-level N-gram language model generation and accumulation unit generates the lower-level N-gram language model by associating each N-long chain of words constituting the word string class with a probability at which said each chain of words occurs, and

the speech recognition apparatus comprises

a word string hypothesis generation unit operable to evaluate a word string hypothesis by multiplying each probability at which said each sequence of N words inside the word string class occurs.

26. A language model generation method for generating language models for speech recognition, comprising:

a higher-level N-gram language model generation and accumulation step of generating and accumulating a higher-level N-gram language model that is obtained by modeling each of a plurality of texts as a sequence of words that includes a word string class having a specific linguistic property; and

a lower-level N-gram language model generation and accumulation step of generating and accumulating a lower-level N-gram language model that is obtained by modeling a sequence of words within the word string class.

27. A speech recognition method for recognizing a speech which is a sequence of uttered words, using the following:

a higher-level N-gram language model that is obtained by modeling each of a plurality of texts as a sequence of words that includes a word string class having a specific linguistic property; and

a lower-level N-gram language model that is obtained by modeling a sequence of words within the word string class.

28. The speech recognition method comprising:

a step of categorizing each word string having a specific linguistic property as a word string class, and providing, to said each word string, a language likelihood which is a logarithm value of a probability, by use of class dependent word N-grams that are obtained by modeling said word string class in dependency on said word string class based on a linguistic relationship between words constituting said word string class;

a step of analyzing a text into a word and the word string class, and providing, to a sequence of said word and the word string class, a language likelihood which is a logarithm value of a probability, by use of class N-grams that are obtained by modeling said sequence of the word and the word string class based on a linguistic relationship; and

a step of ( i ) comparing features parameters extracted from a series of speeches with a pronunciation as well as an acoustic characteristic of each word and generating a set of word hypotheses including an utterance segment of said each word and an acoustic likelihood of said each word, ( ii ) generating a word string hypothesis from said set of word string hypotheses with reference to the class N-grams and the class dependent word N-grams, and ( iii ) outputting a result of the speech recognition.

29. A program for performing a language model generation method that is intended for generating a language model for speech recognition, the program causing a computer to execute the following steps:

a higher-level N-gram language model generation and accumulation step of generating and accumulating a higher-level N-gram language model that is obtained by modeling each of a plurality of texts as a sequence of words that includes a word string class having a specific linguistic property; and

a lower-level N-gram language model generation and accumulation step of generating and accumulating a lower-level N-gram language model that is obtained by modeling a sequence of words within the word string class.

30. A program for performing a speech recognition method that is intended for recognizing a sequence of uttered words, the program causing a computer to execute a speech recognition step that is performed by use of the following:

a higher-level N-gram language model that is obtained by modeling each of a plurality of texts as a sequence of words that includes a word string class having a specific linguistic property; and
a lower-level N-gram language model that is obtained by modeling a sequence of words within the word string class.

**FIG. 1**

Speech inputted → Acoustic processing unit (901) → Acoustic likelihood calculation unit (910) → Word string hypothesis generation unit (920) → Recognition result outputted (900)

Acoustic model unit (911)

Word dictionary unit (912)

Class N-gram accumulation unit (9215)

Class dependent syllable N-gram accumulation unit (9223)

Sentence/phrase corpus accumulation unit (9211) → Morphemic analysis unit (9212) → Class N-gram generation unit (9213)

Word class definition unit (9214)

Name dictionary unit (9221) → Class dependent syllable N-gram generation unit (9222)

EP 1 551 007 A1

## FIG. 2

Speech recognition apparatus — 1

Speech inputted → **Acoustic processing unit** (40) → **Word comparison unit** (50) → **Word string hypothesis generation unit** (80) → Recognition result outputted

Acoustic model unit (60)

Word dictionary unit (70)

Language model generation and accumulation apparatus (10)

Class N-gram generation and accumulation unit (11) ↔ Class dependent word N-gram generation and accumulation unit (12)

EP 1 551 007 A1

# FIG. 3

To 80                                                    11

Class N-gram generation
and accumulation unit

Class N-gram
accumulation unit                    114

Class N-gram
generation unit                      113        → From 12

Sentence/phrase
morphemic
analysis unit                        112

Sentence/phrase
corpus
accumulation unit                    111

# FIG. 4

Sentence/phrase corpus accumulation unit 111

| |
|---|
| Ashita no tenki yoho wo rokuga shite |
| Ashita no Taiyo wo Ute wo rokuga |
| Shiretoko no Shinpi wo miru |
| . <br> . <br> . |

# FIG. 5

Class N-gram accumulation unit 114

| Word string | P(Wi \| Wi-1) |
|---|---|
| \<SS>ashita | 0.45 |
| ashita no | 0.41 |
| no\<title> | 0.35 |
| \<title>wo | 0.59 |
| wo rokuga | 0.43 |
| rokuga shite | 0.35 |
| shite\<SE> | 0.33 |
| rokuga\<SE> | 0.31 |
| \<SS>\<title> | 0.51 |
| ⋮ | ⋮ |

## FIG. 6

**Class dependent word N-gram generation and accumulation unit** — 12

To 80

**124** — Class dependent word N-gram accumulation unit

**126** — Word string class definition accumulation unit

To 11

**125** — Word string class definition generation unit

**123** — Class dependent word N-gram generation unit

**122** — Class morphemic analysis unit

**121** — Class corpus accumulation unit

EP 1 551 007 A1

# FIG. 7

Class corpus accumulation unit 121

| |
|---|
| Tenki yoho |
| Taiyo wo Ute |
| Shiretoko no Shinpi |
| ⋮ |
| Charlie Umi |
| Ikeno Kingyo |
| ⋮ |

# FIG. 8

Class dependent word N-gram accumulation unit 124

| Class Word string | P(Wi \| Wi-1) |
|---|---|
| <CS>-tenki | 0.11 |
| tenki-yoho | 0.15 |
| yoho-<CE> | 0.16 |
| <CS>-taiyo | 0.13 |
| taiyo-wo | 0.11 |
| wo-ute | 0.10 |
| ute-<CE> | 0.12 |
| <CS>-shiretoko | 0.09 |
| shiretoko-no | 0.08 |
| no-shinpi | 0.07 |
| shinpi-<CE> | 0.11 |
| ⋮ | ⋮ |
| <CS>-ikeno | 0.08 |
| ikeno-kingyo | 0.05 |
| kingyo-<CE> | 0.07 |
| <CS>-charlie | 0.07 |
| charlie-umi | 0.05 |
| umi-<CE> | 0.16 |
| ⋮ | ⋮ |

# FIG. 9

Word string class definition accumulation unit 126

| Word string class | Word string |
|---|---|
| title | \<CS\>-tenki-yoho-\<CE\> |
| | \<CS\>-taiyo-wo-ute-\<CE\> |
| | \<CS\>-shiretoko-no-shinpi-\<CE\> |
| | ⋮ |
| Personal name | \<CS\>-charlie-umi-\<CE\> |
| | \<CS\>-ikeno-kingyo-\<CE\> |
| | ⋮ |
| ⋮ | ⋮ |

# FIG. 10

```
┌─────────────────────────┐
│  Speech recognition     │
│  processing start       │
└─────────────────────────┘
            │           ╭S11
┌─────────────────────────┐
│     Obtain speech       │
└─────────────────────────┘
            │           ╭S12
┌─────────────────────────┐
│  Convert speech into    │
│  feature parameters     │
└─────────────────────────┘
            │           ╭S13
┌─────────────────────────┐
│  Generate set of word   │
│  hypotheses             │
└─────────────────────────┘
            │           ╭S14
┌─────────────────────────┐
│  Loop A for all word    │
│  hypotheses             │
└─────────────────────────┘
            │           ╭S15
┌─────────────────────────┐
│  Provide language       │
│  likelihood             │
│  Score and evaluation   │
└─────────────────────────┘
            │           ╭S16
┌─────────────────────────┐
│        Loop A           │
└─────────────────────────┘
            │           ╭S17
┌─────────────────────────┐
│  Speech recognition     │
│  result ← max           │
└─────────────────────────┘
            │
┌─────────────────────────┐
│         End             │
└─────────────────────────┘
```

# FIG. 11

| Word string | Probability |
|---|---|
| <SS>a b c d<SE> | $P(a, b, c, d)$ |
| <SS>C b c d<SE> | $P(C, b, c, d) \cdot P(a \mid C)$ |
| <SS>C c d<SE> | $P(C, c, d) \cdot P(a, b \mid C)$ |
| ⋮ | ⋮ |
| <SS>a C c d<SE> | $P(a, C, c, d) \cdot P(b \mid C)$ |
| <SS>a C d<SE> | $P(a, C, d) \cdot P(b, c \mid C)$ |
| ⋮ | ⋮ |
| ⋮ | ⋮ |
| ⋮ | ⋮ |
| <SS>C<SE> | $P(a, b, c, d \mid C)$ |

## FIG. 12

Speech recognition apparatus — 2

Speech inputted → **Acoustic processing unit** (40) → **Word comparison unit** (50) → **Word string hypothesis generation unit** (80) → Recognition result outputted

Acoustic model unit (60)

Word dictionary unit (70)

Language model generation and accumulation apparatus (20)

Syntactic tree class N-gram generation and accumulation unit (22)

Syntactic tree class dependent word N-gram generation and accumulation unit (23)

Syntactic tree generation unit (21)

EP 1 551 007 A1

# FIG. 13

To 22    To 23    21

Syntactic tree
generation unit

212

Syntactic tree
division unit

211

Syntax analysis
unit

112

Sentence/phrase
morphemic
analysis unit

111

Sentence/phrase
corpus
accumulation
unit

# FIG. 14

TO 80

22

Syntactic tree class N-gram
generation and accumulation unit

222

Syntactic tree class
N-gram accumulation
unit

221

Syntactic tree class
N-gram generation
unit

From 21

# FIG. 15

To 30

23

Syntactic tree class dependent word N-gram generation and accumulation unit

232

Syntactic tree class dependent word N-gram accumulation unit

231

Syntactic tree class dependent word N-gram generation unit

From 21

## FIG. 16

## FIG. 17

Speech recognition apparatus — 3

Speech inputted →

**40** Acoustic processing unit →
**50** Word comparison unit →
**80** Word string hypothesis generation unit → Recognition result outputted

**60** Acoustic model unit
**70** Word dictionary unit

**90** Recognition exception word judgment unit

**30** Language model generation and accumulation apparatus

**31** Class N-gram generation and accumulation unit ↔
**32** Class dependent word N-gram generation and accumulation unit ↔
**33** Class dependent syllable N-gram generation and accumulation unit

EP 1 551 007 A1

## FIG. 18

To 80

31

Class N-gram generation
and accumulation unit

Class N-gram
accumulation
unit — 313

312 — Word output
model generation
unit

311 — Class chain model
generation unit ← From 32

112 — Sentence/phrase
morphemic
analysis unit

111 — Sentence/phrase
corpus accumulation
unit

FIG. 19

To 80  From 90

/32

323

Class dependent word N-gram generation and accumulation unit

Class dependent word
N-gram accumulation
unit

126

125

322

Word string class
definition
accumulation unit

To 31

Word string class
definition
generation unit

Class dependent word
N-gram generation unit

122

321

Class morphemic
analysis unit

Model generation
exception word
judgment unit

To 33

121

Class corpus
accumulation
unit

EP 1 551 007 A1

# FIG. 20

From 90   To 80                                      33

Class dependent syllable
N-gram generation and
accumulation unit

332

Class dependent syllable
N-gram accumulation unit

331

From 32 →  Class dependent syllable
N-gram generation unit

# FIG. 21

Class dependent syllable N-gram accumulation unit 332

| Syllable string | Probability |
|:---:|:---:|
| <MS>-shi | 0.10 |
| shi-re | 0.09 |
| re-to | 0.06 |
| to-ko | 0.07 |
| ko-<ME> | 0.08 |
| ⋮ | ⋮ |

# FIG. 22

"Shiretoko no Shinpi" wo miru

⇩

<SS> <title> wo miru <SE>

<CS> shiretoko no shinpi <CE>

Shiretoko···exception word  <MS>-shi-re-to-ko-<ME>

# FIG. 23

To 80 → (Class dependent word N-gram accumulation unit 124)

13

Class dependent word N-gram generation and accumulation unit

126 Word string class definition accumulation unit

To 31

125 Word string class definition generation unit

124 Class dependent word N-gram accumulation unit

123 Class dependent word N-gram generation unit

122 Class morphemic analysis unit

131 Class corpus obtainment unit

121 Class corpus accumulation unit

EP 1 551 007 A1

## INTERNATIONAL SEARCH REPORT

| | International application No. |
|---|---|
| | PCT/JP03/12701 |

A. CLASSIFICATION OF SUBJECT MATTER
   Int.Cl$^7$ G10L15/18

According to International Patent Classification (IPC) or to both national classification and IPC

B. FIELDS SEARCHED

Minimum documentation searched (classification system followed by classification symbols)
   Int.Cl$^7$ G10L15/18

Documentation searched other than minimum documentation to the extent that such documents are included in the fields searched
   Jitsuyo Shinan Koho          1926–1995   Toroku Jitsuyo Shinan Koho   1994–2003
   Kokai Jitsuyo Shinan Koho    1971–2003   Jitsuyo Shinan Toroku Koho   1996–2003

Electronic data base consulted during the international search (name of data base and, where practicable, search terms used)
   JICST FILE(JOIS), IEEE Xplore

C. DOCUMENTS CONSIDERED TO BE RELEVANT

| Category* | Citation of document, with indication, where appropriate, of the relevant passages | Relevant to claim No. |
|---|---|---|
| A | MASATAKI, MATSUNAGA, KOZAKA, "Hinshi Oyobi Kahen cho Tangoretsu no Fukugo N-gram no Jido Seisei", The Transactions of the Institute of Electros D-II, 25 September, 1998 (25.09.98), Vol.J81-D-II, No.9, pages 1929 to 1936 | 1-30 |
| A | WO 00/73936 A1 (SEHDA, INC.), 07 December, 2000 (07.12.00), Full text; all drawings & US 2002/32564 A1 & US 2002/128821 A1 & EP 1224569 A1 & JP 2003-505778 A | 1-30 |
| A | JP 2000-259175 A (Mitsubishi Electric Corp.), 22 September, 2000 (22.09.00), Full text; all drawings (Family: none) | 1-30 |

☐ Further documents are listed in the continuation of Box C.      ☐ See patent family annex.

| * | Special categories of cited documents: |
|---|---|
| "A" | document defining the general state of the art which is not considered to be of particular relevance |
| "E" | earlier document but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 16 December, 2003 (16.12.03) | 13 January, 2004 (13.01.04) |

| Name and mailing address of the ISA/ Japanese Patent Office | Authorized officer |
|---|---|
| Facsimile No. | Telephone No. |

Form PCT/ISA/210 (second sheet) (July 1998)